# EUROPÄISCHE PATENTSCHRIFT

(11) **EP 3 823 503 B1**
(45) Veröffentlichungstag und Bekanntmachung des Hinweises auf die Patenterteilung: **17.04.2024**
(21) Anmeldenummer: 19759025.0
(22) Anmeldetag: 15.07.2019
(51) Int. Cl.: A47J 31/30

(54) **BRÜHMASCHINE FÜR BRÜHMATERIAL ENTHALTENDE PORTIONSKAPSELN UND VERFAHREN ZUM BRÜHEN EINES BRÜHGETRÄNKS**
BREWING MACHINE FOR SINGLE SERVE CAPSULES CONTAINING BREWING MATERIAL, AND METHOD FOR BREWING A BREWED BEVERAGE
MACHINE À INFUSER POUR DOSETTES CONTENANT UNE MATIÈRE À INFUSER ET PROCÉDÉ D'INFUSION D'UNE BOISSON INFUSÉE

(30) Priorität: 16.07.2018 CH 8762018; 28.01.2019 CH 902019
(43) Veröffentlichungstag der Anmeldung: 26.05.2021
(73) Patentinhaber: AZ Design GmbH, 9200 Gossau (CH); Mihara GmbH, 8041 Zurich (CH)
(72) Erfinder: ZELLWEGER, Adolph, 9200 Gossau (CH); KRUMPHOLZ, Erhard, 8041 Zürich (CH)
(74) Vertreter: Patentanwälte Bregenzer und Reule Partnerschaftsgesellschaft mbB
(86) Internationale Anmeldenummer: PCT/IB2019/000631
(87) Internationale Veröffentlichungsnummer: WO 2020/021326

(56) Entgegenhaltungen:
- EP-A1- 1 967 100
- WO-A1-2005/120311
- WO-A1-2019/021051
- WO-A2-2009/053811

## Beschreibung

Die Erfindung bezieht sich auf eine **Brühmaschine** für Brühmaterial gemäß dem Oberbegriff des Anspruchs 1.

Eine Brühmaschine dieser Art ist aus WO2019/021051A1 bekannt. Weitere Brühmaschinen sind aus WO 2009/053811 A2, WO 2005/120311 A1, EP 1 967 100 A1 bekannt.

Maschinen zum Herstellen von Brühgetränken sind bekannt. Besonders erwähnenswert sind hier einerseits Kaffeemaschinen, welche eine Mahleinheit und eine Brüheinheit aufweisen, und andererseits Kaffeemaschinen, welche zwar eine Brüheinheit, aber keine Mahleinheit aufweisen.

Kaffeemaschinen mit Mahleinheit und Brüheinheit dienen zum Brühen von Kaffee ausgehend von Kaffeebohnen und Wasser. Der Benutzer verwendet Kaffeebohnen, die typischerweise in einem ersten Vorratsbehälter der Kaffeemaschine bereitgestellt werden, sowie Wasser, das typischerweise in einem zweiten Vorratsbehälter der Kaffeemaschine oder durch Anschliessen der Kaffeemaschine an eine Trinkwasserleitung bereitgestellt wird. Um eine Portion eines Kaffee-Heissgetränks herzustellen, wird zunächst in der Mahleinheit der Maschine eine der Portion entsprechende Menge an Kaffeebohnen gemahlen und anschliessend das so hergestellte Mahlgut in der Brüheinheit zusammen mit heissem Wasser und/oder Heissdampf gebrüht, um das Kaffee-Heissgetränk zu erhalten.

Kaffeemaschinen mit Brüheinheit und ohne Mahleinheit dienen zum Brühen von Kaffee ausgehend von Kaffeemahlgut und Wasser. Der Benutzer verwendet aus Kaffeebohnen hergestelltes Mahlgut, das typischerweise in Kapseln bereitgestellt wird, die jeweils eine Mahlgutportion enthalten, sowie Wasser, das typischerweise in einem Vorratsbehälter der Kaffeemaschine oder durch Anschliessen der Kaffeemaschine an eine Trinkwasserleitung bereitgestellt wird. Um eine Portion eines Kaffee-Heissgetränks herzustellen, wird zunächst eine derartige Kapsel in die Maschine eingeführt und anschliessend das in der Kapsel enthaltene Mahlgut im Innern der hier eine Brüheinheit bildenden Kapsel zusammen mit heissem Wasser und/oder Heissdampf gebrüht, um das Kaffee-Heissgetränk zu erhalten.

Die Variante der Kaffeemaschinen mit Brüheinheit und ohne Mahleinheit bietet dem Benutzer gegenüber der Variante der Kaffeemaschinen mit Mahleinheit und Brüheinheit gewisse Vorteile. Erstens sind solche Kaffeemaschinen ohne Mahleinheit günstiger als Kaffeemaschinen mit Mahleinheit. Zweitens können Kapseln mit verschiedenen Mahlgutsorten bereitgestellt werden, so dass der Benutzer beim Zubereiten jeder Portion nach Belieben ein Kaffee-Heissgetränk seiner Wahl herstellen kann, indem er eine Kapsel mit dem entsprechenden Mahlgut auswählt.

Dennoch benötigen derartige Kaffeemaschinen mit Brüheinheit und ohne Mahleinheit immer noch eine Pumpe, um der Brüheinheit bzw. der diese Brüheinheit bildenden Kapsel mit dem darin enthaltenen Mahlgut heisses Wasser und/oder heissen Dampf zuzuführen.

Der Erfindung liegt die Aufgabe zugrunde, eine Kaffeemaschine mit Brüheinheit und ohne Mahleinheit der eingangs beschriebenen Art bereitzustellen, welche noch weiter vereinfacht ist und insbesondere keine Pumpe aufweist.

Zur Lösung dieser Aufgabe ist eine Brühmaschine gemäß der technischen Lehre des Anspruchs 1 vorgesehen.

Vorzugsweise ist die Fluidverbindung (5) mit der Temperierkammer (TK) thermisch gekoppelt.

Vorzugsweise ist die Druckkammer (3) von der Temperierkammer (TK) thermisch entkoppelt.

Vorzugsweise weist die Fluidverbindung (5) einen ersten Fluidkanal (FK1) auf, der sich von der Druckkammer (3) in die Brühkammer (4) hinein erstreckt und an seinem in die Druckkammer ragenden Ende eine Öffnung (O1) hat. (erstes Steigrohr)

Vorzugsweise weist die Fluidverbindung (5) einen zweiten Fluidkanal (FK2) auf, der sich von der Brühkammer (4) weg erstreckt und an seinem Ende eine Öffnung (02) hat. (zweites Steigrohr)

Vorzugsweise ist der erste Fluidkanal (FK1) mit der Temperierkammer (TK) thermisch gekoppelt.

Vorzugsweise ist die Temperierkammer (TK) eine thermische Senke.

Die Temperierkammer ist mit einem Phasenwechselmaterial gefüllt, insbesondere mit einem Wachs, dessen Schmelztemperatur (Schmelzpunkt) oder Schmelztemperatur-Bereich (Erweichungsbereich) im Bereich von 20°C bis 95°C liegt.

Vorzugsweise weist der erste Fluidkanal (FK1) eine Vielzahl von Windungen entlang seines Verlaufs durch die Temperierkammer auf.

Vorzugsweise weist der erste Fluidkanal (FK1) eine Vielzahl von Abwinkelungen entlang seines Verlaufs durch die Temperierkammer (TK) auf.

Vorzugsweise weist der erste Fluidkanal (FK1) eine Vielzahl von fluidmässig parallel geschalteten Fluidkanal-Zweigkanälen entlang seines Verlaufs durch die Temperierkammer (TK) auf, welche über das gesamte Volumen der Temperierkammer (TK) verteilt angeordnet sind.

Vorzugsweise ist der Fluidkanal (FK1) ein Schlauch.

Vorzugsweise weist der Schlauch ein Polymermaterial, insbesondere ein Silikonmaterial oder ein Gummimaterial, auf.

Vorzugsweise weist der Schlauch schraubenartige Windungen auf.

Vorzugsweise ist der Schlauch knäuelartig in der (TK) angeordnet.

Vorzugsweise weist der Schlauch erste schraubenartige Windungen (erste Helixstruktur) mit einem ersten mittleren Durchmesser und einer ersten mittleren Ganghöhe als Feinstruktur auf.

Vorzugsweise weist der Schlauch zweite schraubenartige Windungen (zweite Helixstruktur) mit einem zweiten mittleren Durchmesser und einer zweiten mittleren Ganghöhe als Grobstruktur auf.

Vorzugsweise weist die Temperierkammer (TK) ein Metall und/oder Graphit als Wärmeleiter auf.

Vorzugsweise weist die Temperierkammer (TK) eine Matrix aus Metall und/oder Graphit auf, welche sich innerhalb eines Phasenwechselmaterials erstreckt. Vorzugsweise weist die Fluidverbindung (5) bzw der erste Fluidkanal (FK1) innerhalb der Temperierkammer (TK) Windungen auf und/oder ist in mehrere parallel geschaltete Fluidverbindungs-Zweige aufgeteilt (spiralförmiger, helixförmiger oder mäandrierender Verlauf).

Vorzugsweise enthält die Temperierkammer (K3) eine Vielzahl von Phasenwechselmaterial-Kapseln (PWK).

Vorzugsweise enthält eine jeweilige Phasenwechselmaterial-Kapsel (PWK) einen Kern aus einem Phasenwechselmaterial, dessen Schmelztemperatur (Schmelzpunkt) oder Schmelztemperatur-Bereich (Erweichungsbereich) im Bereich von 20°C bis 95°C liegt, und eine den Kern umschliessende Umhüllung, deren Schmelztemperatur (Schmelzpunkt) oder Schmelztemperatur-Bereich (Erweichungsbereich) oberhalb von 180°C, vorzugsweise im Bereich von 180°C bis 500°C liegt.

Vorzugsweise liegen die Phasenwechselmaterial-Kapseln (PWK) als lockere oder dichte Packung als Schüttgut innerhalb der Temperierkammer (TK) vor und sind von dem in der Druckkammer (3) erzeugten heissen Wasser und/oder heissen Wasserdampf umströmbar und/oder durchströmbar.

Vorzugsweise füllen die Phasenwechselmaterial-Kapseln (PWK) als gesinterter Block bzw. als Block aus miteinander verklebten oder aneinder geschmolzenen Phasenwechselmaterial-Kapseln die Temperierkammer (TK) aus, wobei der Block von dem in der Druckkammer (3) erzeugten heissen Wasser und/oder heissen Wasserdampf durchströmbar ist.

Vorzugsweise ist die Fluidverbindung (5) zwischen der Druckkammer (3) und der Brühkammer (4) mit einer Temperierkammer (TK) thermisch gekoppelt.

Vorzugsweise ist die Temperierkammer (TK) eine thermische Senke.

Vorzugsweise weist die **Temperierkammer (TK) einen Wasserbehälter (30) auf oder ist die Temperierkammer (TK) durch einen Wasserbehälter (30) gebildet,** durch welchen die Fluidverbindung (5) verläuft, welche die Druckkammer (3) mit der Brühkammer (4) verbindet.

Vorzugsweise weist die Fluidverbindung (5) einen Leitungsabschnitt (51) auf, welcher im Innern des Wasserbehälters (30) angeordnet ist.

Vorzugsweise ist der **Wasserbehälter (30) ein Wasser-Vorratsbehälter,** welcher für den Brühvorgang bestimmtes Wasser enthält.

Vorzugsweise weist der Leitungsabschnitt (51) Windungen auf.

Vorzugsweise ist der Leitungsabschnitt (51) im unteren Teil des Innenraums des Wasserbehälters (30) angeordnet.

Vorzugsweise weist der Leitungsabschnitt (51) ein Rohr oder einen Schlauch auf. Vorzugsweise ist der Leitungsabschnitt (51) aus Metall, insbesonders aus Stahl, Aluminium oder Kupfer, oder aus Polymer, insbesondere aus einem Elastomer, gefertigt.

Vorzugsweise ist **ein Phasenwechselmaterial (PWM)** im Innern des Wasserbehälters (30) angeordnet.

Vorzugsweise ist das Phasenwechselmaterial (PWM) in einem wasserunlöslichen Material gekapselt.

Vorzugsweise weist das Phasenwechselmaterial (PWM) eine Vielzahl von Phasenwechselmaterial-Kapseln (PWK) auf, deren Kern Phasenwechselmaterial (PWM) enthält und deren Umhüllung aus dem wasserunlöslichen Material gebildet ist.

Vorzugsweise enthält eine jeweilige Phasenwechselmaterial-Kapsel (PWK) einen Kern aus einem Phasenwechselmaterial, dessen Schmelztemperatur (Schmelzpunkt) oder Schmelztemperatur-Bereich (Erweichungsbereich) im Bereich von 20°C bis 95°C liegt, und eine den Kern umschliessende Umhüllung enthält, deren Schmelztemperatur (Schmelzpunkt) oder Schmelztemperatur-Bereich (Erweichungsbereich) oberhalb von 180°C, vorzugsweise im Bereich von 180°C bis 500°C liegt.

Vorzugsweise liegen die Phasenwechselmaterial-Kapseln (PWK) als lockere oder dichte Packung als Schüttgut innerhalb der Temperierkammer (TK) vor und sind von dem in der Druckkammer (3) erzeugten heissen Wasser und/oder heissen Wasserdampf umströmbar und/oder durchströmbar.

Vorzugsweise füllen die Phasenwechselmaterial-Kapseln (PW) als gesinterter Block bzw. als Block aus miteinander verklebten oder aneinder geschmolzenen Phasenwechselmaterial-Kapseln die Temperierkammer (TK) aus, wobei der Block von dem in der Druckkammer (3) erzeugten heissen Wasser und/oder heissen Wasserdampf durchströmbar ist.

Vorzugsweise hat der Wasserbehälter (30) einen etwa C-förmigen Grundriss und umgreift die Brühkammer (4) bzw. ein die Brühkammer (4) umgebendes Gehäuse (60).

Erfindungsgemäß ist die **Brühkammer (4) in einer Baueinheit (70) enthalten,** welche in die Brühmaschine (1, 1') **zu einer Betriebsstellung hineinführbar** oder **zu einer Beladestellung aus ihr herausführbar** ist.

Vorzugsweise weist die Brühmaschine (1') einen ersten Maschinenteil (T1) und einen zweiten Maschinenteil (T2) sowie eine **Hebelvorrichtung (H)** auf, durch deren Betätigung der erste Maschinenteil (T1) und der zweite Maschinenteil (T2) zu **einer Betriebsstellung aufeinander zu** oder **zu einer Beladestellung voneinander weg bewegbar** sind.

Vorzugsweise weist die Brühmaschine (1') ein **erstes Dichtungsmittel (11)** zwischen dem ersten Maschinenteil (T1) und der Baueinheit (70) und ein **zweites Dichtungsmittel (12)** zwischen dem zweiten Maschinenteil (T2) und der Baueinheit (70) auf, wobei das erste Dichtungsmittel (11) zum Abdichten der sich zwischen der Druckkammer (3) und der Brühkammer (4) erstreckenden Fluidverbindung (5) an einer ersten Schnittstelle zwischen dem ersten Maschinenteil (T1) und der Baueinheit (70) dient und das zweite Dichtungsmittel (12) zum Abdichten der sich zwischen der Druckkammer (3) und der Brühkammer (4) erstreckenden Fluidverbindung (5) an einer zweiten Schnittstelle zwischen dem zweiten Maschinenteil (T2) und der Baueinheit (70) dient.

Vorzugsweise sind die Dichtungsmittel (11, 12) elastische Dichtungsmittel wie z.B. O-Ringe.

Vorzugsweise erfolgt das Abdichten der Fluidverbindung (5) an den beiden Schnittstellen durch Betätigen der Hebelvorrichtung (H), wodurch der erste Maschinenteil (T1) und der zweite Maschinenteil (T2) zu der Betriebsstellung aufeinander zu bewegt und die Dichtungsmittel (11, 12) komprimiert werden.

Vorzugsweise weist die Baueinheit (70) eine **Aussparung (71)** zur Aufnahme einer Portionskapsel (2) oder zur Aufnahme von unverpacktem (losem) Brühmaterial auf.

Vorzugsweise ist die Baueinheit (70) eine Schublade.

Vorzugsweise ist das erste Aufstech- oder Aufschlitz-Mittel (7), welches zum Aufstechen oder Aufschlitzen der Portionskapsel (2) an einem ersten Kapselort (KO1) an der Kapseloberfläche dient, in der Aussparung (71) der Baueinheit (70) angeordnet.

Vorzugsweise weist das erste Aufstech-oder Aufschlitz-Mittel (7) mindestens ein Röhrchen (7) auf, welches bei in die Brühmaschine (1, 1') hineingeführter Baueinheit (70) mit dem ersten Fluidkanal (FK1) in Fluidverbindung steht und sich in die Aussparung (71), welche als Brühkammer (4) dient, hinein erstreckt und an seinem in die Aussparung (71) ragenden Ende (7a) eine Öffnung hat.

Vorzugsweise ist das Ende (7a) des Röhrchens (7) abgeschrägt. (vzw. nur partielles Durchstechen der Kapselwand am Kapselort KO1)

Vorzugsweise ist die Aussparung (71) zur Aufnahme einer Portionskapsel (2) oder zur Aufnahme von unverpacktem (losem) Brühmaterial rotationssymmetrisch bezüglich einer **Geraden** (G), welche sich orthogonal zu einer **Ebene** erstreckt, entlang welcher die Baueinheit (70) in die Brühmaschine (1') hineinführbar und aus ihr herausführbar ist.

Vorzugsweise ist die Aussparung (71) zur Aufnahme einer Portionskapsel (2) oder zur Aufnahme von unverpacktem (losem) Brühmaterial rotationssymmetrisch bezüglich einer **Geraden** (G), entlang welcher der erste Maschinenteil (T1) und der zweite Maschinenteil (T2) aufeinander zu oder voneinander weg bewegbar sind.

Vorzugsweise hat die Aussparung (71) die Form eines Kegelstumpfs, eines Kugelabschnitts, eines Ellipsoidabschnitts oder eines Pyramidenstumpfs.

Vorzugsweise weist das Aufstech- oder Aufschlitz-Mittel (7) mindestens drei Röhrchen (7) auf.

Vorzugsweise verläuft die Längsachse (L) eines jeweiligen Röhrchens (7) parallel zu der Geraden (G).

Vorzugsweise sind die mindestens drei Röhrchen (7) entlang einer Kreislinie bzw. entlang einer Umfangsrichtung um die Gerade (G) herum gleichmässig, d.h. in gleichen Winkelabständen voneinander angeordnet.

Vorzugsweise hat das mindestens eine Röhrchen (7) einen Innendurchmesser (a) im Bereich von 0.3 mm bis 1 mm, vorzugsweise im Bereich von 0.4 mm bis 0.8 mm.

Vorzugsweise hat das mindestens eine Röhrchen (7) in der Betriebsstellung der Brühmaschine (1') eine Eindringtiefe (b) in die Aussparung (71) im Bereich von 0.5 mm bis 2 mm, vorzugsweise im Bereich von 0.8 mm bis 1.2 mm.

Vorzugsweise hat das mindestens eine Röhrchen (7) an seinem in die Aussparung (71) ragenden Ende (7a) eine Abschrägung, deren Winkel (c) zur Längsachse (L) des Röhrchens (7) im Bereich von 10° und 80°, vorzugsweise im Bereich von 30° und 60°, liegt.

Vorzugsweise weist die Brühmaschine (1, 1') eine elektrische Heizvorrichtung (xx) auf, welche mit der Druckkammer (3) und in ihr enthaltenem Wasser thermisch gekoppelt ist.

Vorzugsweise weist die Brühmaschine (1, 1') eine thermische Kontaktfläche (xx) aufweist, welche mit der Druckkammer (3) und in ihr enthaltenem Wasser thermisch gekoppelt ist und welche mit einer externen Wärmequelle in thermischen Kontakt gebracht werden kann.

Vorzugsweise weist die Brühmaschine (1, 1') einen Wasser-Vorratsbehälter auf, welcher über eine weitere Fluidverbindung (5') mit der Druckkammer (3) in Fluidverbindung steht.

Vorzugsweise verläuft die weitere Fluidverbindung (5') durch die Temperierkammer (TK) hindurch.

Vorzugsweise ist die weitere Fluidverbindung (5') mit der Temperierkammer (TK) thermisch gekoppelt.

Vorzugsweise weist die Fluidverbindung (5) einen in der Temperierkammer (TK) angeordneten ersten Wärmetauscher (WT1) auf, mittels welchem die Fluidverbindung (5) mit der Temperierkammer (TK) thermisch gekoppelt ist, und weist die weitere Fluidverbindung (5') einen in der Temperierkammer (TK) angeordneten zweiten Wärmetauscher (WT2) auf, mittels welchem die weitere Fluidverbindung (5') mit der Temperierkammer (TK) thermisch gekoppelt ist. Vorzugsweise weist die Brühmaschine (1, 1') einen Wasser-Einfüllbereich (85) auf, über welchen Wasser in die beheizbare Druckkammer / Kessel (3) einfüllbar ist. Vorzugsweise wesit die Druckkammer (3) in dem Wasser-Einfüllbereich (85) ein Einfüllventil (86) auf.

Vorzugsweise weist die Druckkammer (3) in dem Wasser-Einfüllbereich (85) einen Einfülltrichter (87) auf.

Vorzugsweise ist das Einfüllventil (86) im Mündungskanal bzw. der Mündungsöffnung (87a) des Einfülltrichters (87) angeordnet.

Vorzugsweise weist das Einfüllventil (86) einen Ventilstössel (86a) und ein elastisch verformtes Federglied (86b) auf, welches den Ventilstössel (86a) in einer Abdichtstellung hält bzw. in eine Abdichtstellung drückt.

Vorzugsweise ist der Ventilstössel (86a) von ausserhalb der Druckkammer (3) unter weiterer elastischer Verformung des Federglieds (86b) ins Innere der Druckkammer (3) zu einer Wasser-Einfüllstellung hin verschiebbar.

Vorzugsweise weist die Brühmaschine (1, 1') einen Heissgetränk-Austrittsbereich (95) auf, über welchen das heisse Brühgetränk aus der Brühmaschine austreten kann.

Vorzugsweise weist der Heissgetränk-Austrittsbereich ein Überdruckventil (96) auf, welches durch einen Überdruck von heissem Brühgetränk in der Brühkammer (4) in eine Heissgetränk-Austrittsstellung gebracht werden kann.

Vorzugsweise weist das Überdruckventil (96) einen Ventilstössel oder eine Ventilkugel (96a) und ein elastisch verformtes Federglied (96b) auf, welches den Ventilstössel oder die Ventilkugel (96a) in einer Abdichtstellung hält bzw. in eine Abdichtstellung drückt.

Erfindungsgemäss weist der Heissgetränk-Austrittsbereich (95) ein **Barriereglied (BG)** mit einer Vielzahl von **Barriere-Öffnungen (BO)** in dem Heissgetränk-Fluidstrom auf, wobei das Barriereglied (BG) einen definierten Fluidwiderstand für den Heissgetränk-Fluidstrom bildet.

Vorzugsweise ist das Barriereglied (BG) in dem Heissgetränk-Fluidstrom stromauf von dem Überdruck-Ventil (96) angeordnet.

Vorzugsweise weist die Baueinheit (70) ein **erstes Dichtungsmittel (11)** und/oder ein **zweites Dichtungsmittel (12)** auf.

Vorzugsweise sind die Dichtungsmittel (11, 12) elastische Dichtungsmittel wie z.B. O-Ringe.

Vorzugsweise weist die Baueinheit (70) eine **Aussparung (71)** zur Aufnahme einer Portionskapsel (2) oder zur Aufnahme von unverpacktem (losem) Brühmaterial auf.

Vorzugsweise ist die Baueinheit (70) eine Schublade.

Vorzugsweise weist die Baueinheit (70) ein **erstes Aufstech- oder Aufschlitz-Mittel (7),** welches zum Aufstechen oder Aufschlitzen einer Portionskapsel (2) an einem ersten Kapselort (KO1) an deren Kapseloberfläche dient, in der Aussparung (71) der Baueinheit (70) auf.

Vorzugsweise weist das erste Aufstech- oder Aufschlitz-Mittel (7) mindestens ein Röhrchen (7) auf, welches bei in die Brühmaschine (1, 1') in die Betriebstellung hineingeführter Baueinheit (70) mit einem ersten Fluidkanal (FK1) der Brühmaschine (1, 1') in Fluidverbindung steht und sich in die Aussparung (71), welche als Brühkammer (4) der Brühmaschine (1, 1') dient, hinein erstreckt und an seinem in die Aussparung (71) ragenden Ende (7a) eine Öffnung hat.

Vorzugsweise ist das Ende (7a) des Röhrchens (7) abgeschrägt. (vzw. nur partielles Durchstechen der Kapselwand am Kapselort KO1)

Vorzugsweise ist die Aussparung (71) zur Aufnahme einer Portionskapsel (2) oder zur Aufnahme von unverpacktem (losem) Brühmaterial rotationssymmetrisch bezüglich einer **Geraden** (G), welche sich vertikal zu einer **Ebene** erstreckt, entlang welcher die Baueinheit (70) in eine Brühmaschine (1, 1') hineinführbar und aus ihr herausführbar ist.

Vorzugsweise ist die Aussparung (71) zur Aufnahme einer Portionskapsel (2) oder zur Aufnahme von unverpacktem (losem) Brühmaterial rotationssymmetrisch bezüglich einer **Geraden** (G), entlang welcher ein erster Maschinenteil (T1) und ein zweiter Maschinenteil (T2) der Brühmaschine (1, 1') aufeinander zu oder voneinander weg bewegbar sind.

Vorzugsweise hat die Aussparung (71) die Form eines Kegelstumpfs, eines Kugelabschnitts, eines Ellipsoidabschnitts oder eines Pyramidenstumpfs.

Vorzugsweise weist das Aufstech- oder Aufschlitz-Mittel (7) mindestens ein Röhrchen (7), vorzugsweise mindestens drei Röhrchen (7), auf.

Vorzugsweise verläuft die Längsachse (L) eines jeweiligen Röhrchens (7) parallel zu der Geraden (G).

Vorzugsweise sind die mindestens drei Röhrchen (7) entlang einer Kreislinie bzw. entlang einer Umfangsrichtung um die Gerade (G) herum gleichmässig verteilt, d.h. in gleichen Winkelabständen voneinander angeordnet.

Vorzugsweise hat das mindestens eine Röhrchen (7) einen Innendurchmesser (a) im Bereich von 0.3 mm bis 1 mm, vorzugsweise im Bereich von 0.4 mm bis 0.8 mm.

Vorzugsweise hat das mindestens eine Röhrchen (7) in der Betriebsstellung der Brühmaschine (1') eine Eindringtiefe (b) in die Aussparung (71) im Bereich von 0.5 mm bis 2 mm, vorzugsweise im Bereich von 0.8 mm bis 1.2 mm.

Vorzugsweise hat das mindestens eine Röhrchen (7) an seinem in die Aussparung (71) ragenden Ende (7a) eine Abschrägung, deren Winkel (c) zur Längsachse (L) des Röhrchens (7) im Bereich von 10° und 80°, vorzugsweise im Bereich von 30° und 60°, liegt.

Erfindungsgemäß ist der Baueinheit (70'; 70"; 70*; 70**) ein **Barriereglied (BG'; BG"; BG*; BG**)** mit einer Vielzahl von **Barriere-Öffnungen (BO)** zugeordnet, wobei das Barriereglied zwischen einer **Beladestellung,** in welcher in die Baueinheit eine Brühmaterial enthaltende Portionskapsel (2) eingeführt oder loses Brühmaterial eingefüllt werden kann, und einer **Betriebsstellung,** in welcher das Barriereglied einen Teil der Wand der Brühkammer (4) bilden kann, hin und her bewegbar ist.

Vorzugsweise ist in der Betriebsstellung des Barriereglieds (BG'; BG"; BG*; BG**) das erste Dichtungsmittel (11) zwischen dem Barriereglied und einem Rand (71a) der Aussparung (71) angeordnet.

Vorzugsweise ist das Barriereglied (BG'; BG"; BG*; BG**) an der Baueinheit mittels eines Gelenks (75; 76) drehbar gelagert und zwischen der Beladestellung und der Betriebsstellung hin und her schwenkbar.

Vorzugsweise ist das Gelenk ein Kugelgelenk. (nicht gezeigt)

Vorzugsweise definiert das Gelenk (75) eine Drehachse, welche in der bestimmungsgemässen Gebrauchsstellung der Baueinheit, d.h. wenn die Öffnung der Aussparung (71) nach oben weist, horizontal verläuft.

Vorzugsweise definiert das Gelenk (76) eine Drehachse, welche in der bestimmungsgemässen Gebrauchsstellung der Baueinheit, d.h. wenn die Öffnung der Aussparung (71) nach oben weist, vertikal verläuft.

Vorzugsweise weist das Barriereglied (BG'; BG"; BG*; BG**) das **zweite Aufstech-oder Aufschlitz-Mittel (8)** auf, welches zum Aufstechen oder Aufschlitzen einer Portionskapsel (2) an einem zweiten Kapselort (KO2) an deren Kapseloberfläche dient.

Zur Lösung der eingangs erwähnten Aufgabe stellt die Erfindung auch ein **Verfahren** zum Brühen eines Heissgetränks unter Verwendung der Brühmaschine gemäß der technischen Lehre des Anspruchs 1 bereit, wobei das Verfahren die folgenden Schritte aufweist:
a) Einsetzen einer Portionskapsel (2) in eine Brühkammer (4) der Brühmaschine (1, 1') bzw. der Baueinheit (70);
b) Aufstechen und/oder Aufschlitzen der in die Brühkammer eingeführten Portionskapsel (2) an einem ersten Kapselort (KO1) an der Kapseloberfläche mittels eines ersten Aufstech- oder Aufschlitz-Mittels (7) der Brühmaschine;
c) Aufstechen und/oder Aufschlitzen der in die Brühkammer eingeführten Portionskapsel (2) an einem zweiten Kapselort (KO2) an der Kapseloberfläche mittels eines zweiten Aufstech- oder Aufschlitz-Mittels (8) der Brühmaschine;
d) Erzeugen von heissem Wasser und/oder heissem Wasserdampf in einer Druckkammer (3);
e) Durchströmen der in die Brühkammer (4) eingeführten Portionskapsel (2) von dem heissen Wasser und/oder heissen Wasserdampf von dem ersten Kapselort (KO1) zu dem zweiten Kapselort (KO2) der Portionskapsel (2); und
f) Auffangen des aus der Portionskapsel (2) austretenden Brühgetränks in einem Auffangbehälter.

Vorzugsweise wird in **Schritt e)** das Durchströmen der Brühkammer (4) unter Ausnutzung des Druckes von in Schritt d) in der Druckkammer (3) erzeugtem heissem Wasserdampf bewirkt, welcher das heisse Wasser und/oder den heissen Wasserdampf durch eine die Druckkammer (3) und die Brühkammer (4) verbindende Fluidverbindung (5) und durch die Brühkammer (4) hindurch drückt.

Vorzugsweise wird in **Schritt e)** das Durchströmen der Brühkammer (4) mittels einer Pumpe bewirkt, welche in einer die Druckkammer (3) und die Brühkammer (4) verbindenden Fluidverbindung (5) angeordnet ist und das heisse Wasser und/oder den heissen Wasserdampf durch die Fluidverbindung (5) und die Brühkammer (4) hindurch drückt.

Vorzugsweise erfolgt in **Schritt b) und/oder Schritt c)** das Aufstechen und/oder Aufschlitzen der Portionskapsel (2) in Anhängigkeit von der Eindringtiefe des ersten Aufstech- oder Aufschlitz-Mittels (7) und/oder des zweiten Aufstech- oder Aufschlitz-Mittels (8) in die Portionskapsel (2) derart, dass am ersten Kapselort (KO1) bzw. am zweiten Kapselort (KO2) an der Kapseloberfläche ein partielles Aufstechen bzw. Aufschlitzen unter Erzeugung einer **Schnittlinie** in der Kapselwand **mit einem ersten Ende und einem zweiten Ende** erfolgt.

Vorzugsweise weist die Schnittlinie einen geraden Abschnitt auf.

Vorzugsweise weist die Schnittlinie einen gekrümmten Abschnitt auf.

Vorzugsweise erfolgt in **Schritt b) und/oder Schritt c)** das Aufstechen und/oder Aufschlitzen der Portionskapsel (2) in Anhängigkeit von der Eindringtiefe des ersten Aufstech- oder Aufschlitz-Mittels (7) und/oder des zweiten Aufstech- oder Aufschlitz-Mittels (8) in die Portionskapsel (2) derart, dass am ersten Kapselort (KO1) bzw. am zweiten Kapselort (KO2) an der Kapseloberfläche ein komplettes Aufstechen bzw. Aufschlitzen unter Erzeugung einer **geschlossenen Schnittlinie** in der Kapselwand erfolgt.

Die Erfindung stellt somit eine Brühmaschine mit Wärme/Dampf-Antrieb bereit, welche keine Pumpe benötigt und eine Temperaturbegrenzung (maximale Höchsttemperatur) für das Brühwasser in der Brühkammer bzw. im Innern der Portionskapseln ("Kaffeekapseln") ermöglicht. Durch die in der Fluidverbindung zwischen der Druckkammer und der Brühkammer angeordnete Temperierkammer kann die Temperatur des in die Brühkammer eintretenden heissen Wassers für einen optimalen Brühvorgang (Brühtemperatur, Verweilzeit des Wassers in der Brühkammer, etc.) eingestellt werden.

Weitere Vorteile, Merkmale und Anwendungsmöglichkeiten der Erfindung ergeben sich aus der Zeichnung, in welcher nicht einschränkend aufzufassende Ausführungsbeispiele der erfindungsgemässen Brühmaschine, der Baueinheit und der Portionskapse dargestellt sind, wobei
Fig. 1 ein erstes Ausführungsbeispiel der Brühmaschine zeigt;
Fig. 2 ein zweites Ausführungsbeispiel der Brühmaschine zeigt;
Fig. 3 ein drittes Ausführungsbeispiel der Brühmaschine zeigt;
Fig. 4 eine erste Ansicht eines ersten Ausführungsbeispiels der Baueinheit bzw. Komponente der Brühmaschine mit einer Portionskapsel zeigt;
Fig. 5A eine zweite Ansicht des ersten Ausführungsbeispiels der Baueinheit bzw. Komponente der Brühmaschine ohne Portionskapsel zeigt;
Fig. 5B eine dritte Ansicht des ersten Ausführungsbeispiels der Baueinheit bzw. Komponente der Brühmaschine mit einer Portionskapsel zeigt;
Fig. 6 eine ausführlichere Darstellung des dritten Ausführungsbeispiels zeigt;
Fig. 7A eine erste Ansicht eines vierten Ausführungsbeispiels der Brühmaschine zeigt;
Fig. 7B eine zweite Ansicht des vierten Ausführungsbeispiels der Brühmaschine zeigt;
Fig. 7C eine dritte Ansicht des vierten Ausführungsbeispiels der Brühmaschine zeigt;
Fig. 7D eine vierte Ansicht des vierten Ausführungsbeispiels der Brühmaschine zeigt;
Fig. 7E eine fünfte Ansicht des vierten Ausführungsbeispiels der Brühmaschine zeigt;
Fig. 8A eine erste Ansicht eines fünften Ausführungsbeispiels der Brühmaschine zeigt;
Fig. 8B eine zweite Ansicht des fünften Ausführungsbeispiels der Brühmaschine zeigt;
Fig. 8C eine dritte Ansicht des fünften Ausführungsbeispiels der Brühmaschine zeigt;
Fig. 8D eine vierte Ansicht des fünften Ausführungsbeispiels der Brühmaschine zeigt;
Fig. 8E eine fünfte Ansicht des fünften Ausführungsbeispiels der Brühmaschine zeigt;
Fig. 9 eine erste Ansicht eines zweiten Ausführungsbeispiels der Baueinheit bzw. Komponente des dritten oder vierten Ausführungsbeispiels der Brühmaschine zeigt; (Schublade für loses oder gekapseltes Brühmaterial)
Fig. 10 eine zweite Ansicht des zweiten Ausführungsbeispiels der Baueinheit bzw. Komponente des dritten oder vierten Ausführungsbeispiels der Brühmaschine zeigt; (Schublade für loses oder gekapseltes Brühmaterial)
Fig. 11 eine vergrösserte Ansicht des fünften Ausführungsbeispiels der Brühmaschine zeigt;
Fig. 12A eine erste Ansicht eines dritten Ausführungsbeispiels der Baueinheit bzw. Komponente der Brühmaschine zeigt;
Fig. 12B eine zweite Ansicht des dritten Ausführungsbeispiels der Baueinheit bzw. Komponente der Brühmaschine zeigt;
Fig. 12C eine dritte Ansicht des dritten Ausführungsbeispiels der Baueinheit bzw. Komponente der Brühmaschine zeigt;
Fig. 12D eine vierte Ansicht des dritten Ausführungsbeispiels der Baueinheit bzw. Komponente der Brühmaschine zeigt;
Fig. 12E eine fünfte Ansicht des dritten Ausführungsbeispiels der Baueinheit bzw. Komponente der Brühmaschine zeigt;
Fig. 13A eine erste Ansicht eines vierten Ausführungsbeispiels der Baueinheit bzw. Komponente der Brühmaschine zeigt;
Fig. 13B eine zweite Ansicht des vierten Ausführungsbeispiels der Baueinheit bzw. Komponente der Brühmaschine zeigt;
Fig. 13C eine dritte Ansicht des vierten Ausführungsbeispiels der Baueinheit bzw. Komponente der Brühmaschine zeigt;
Fig. 13D eine vierte Ansicht des vierten Ausführungsbeispiels der Baueinheit bzw. Komponente der Brühmaschine zeigt;
Fig. 14A eine erste Ansicht eines fünften Ausführungsbeispiels der Baueinheit bzw. Komponente der Brühmaschine zeigt;
Fig. 14B eine zweite Ansicht des fünften Ausführungsbeispiels der Baueinheit bzw. Komponente der Brühmaschine zeigt;
Fig. 14C eine dritte Ansicht des fünften Ausführungsbeispiels der Baueinheit bzw. Komponente der Brühmaschine zeigt;
Fig. 14D eine vierte Ansicht des fünften Ausführungsbeispiels der Baueinheit bzw. Komponente der Brühmaschine zeigt;
Fig. 15A eine erste Ansicht eines sechsten Ausführungsbeispiels der Baueinheit bzw. Komponente der Brühmaschine zeigt;
Fig. 15B eine zweite Ansicht des sechsten Ausführungsbeispiels der Baueinheit bzw. Komponente der Brühmaschine zeigt;
Fig. 15C eine dritte Ansicht des sechsten Ausführungsbeispiels der Baueinheit bzw. Komponente der Brühmaschine zeigt;
Fig. 15D eine vierte Ansicht des sechsten Ausführungsbeispiels der Baueinheit bzw. Komponente der Brühmaschine zeigt;
Fig. 16A eine erste Ansicht eines Wasser-Einfüllbereichs sowie weiterer Komponenten eines siebten Ausführungsbeispiels der Brühmaschine zeigt;
Fig. 16B eine zweite Ansicht des Wasser-Einfüllbereichs sowie weiterer Komponenten des siebten Ausführungsbeispiels der Brühmaschine zeigt;
Fig. 16C eine dritte Ansicht des Wasser-Einfüllbereichs sowie weiterer Komponenten des siebten Ausführungsbeispiels der Brühmaschine zeigt;
Fig. 16D eine vierte Ansicht des Wasser-Einfüllbereichs sowie weiterer Komponenten des siebten Ausführungsbeispiels der Brühmaschine zeigt;
Fig. 17A eine erste Ansicht eines Heissgetränk-Austrittsbereichs eines achten Ausführungsbeispiels der Brühmaschine zeigt; und
Fig. 17B eine zweite Ansicht des Heissgetränk-Austrittsbereichs des achten Ausführungsbeispiels der Brühmaschine zeigt.

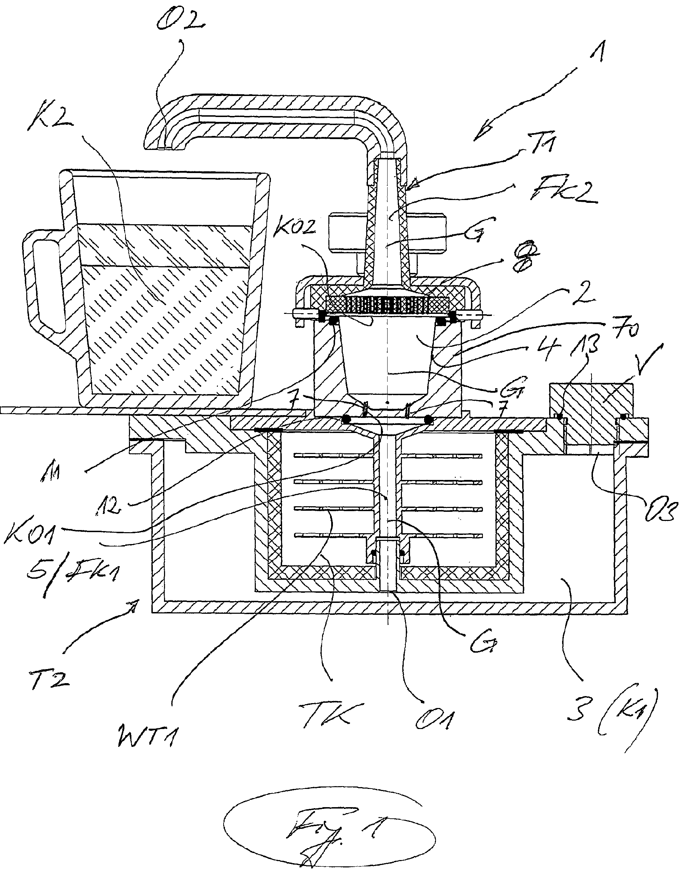

In Fig. 1 ist ein erstes Ausführungsbeispiel der Brühmaschine 1 gezeigt. Die Brühmaschine 1 hat einen ersten Maschinenteil T1 und einen zweiten Maschinenteil T2. Der erste Maschinenteil T1 bildet einen oberen Bereich der Brühmaschine 1, während der zweite Maschinenteil T2 einen unteren Bereich der Brühmaschine 1 bildet. In die Brühmaschine 1 kann man eine ein Brühmaterial enthaltende Portionskapsel 2 einführen, um ein heisses Brühgetränk herzustellen. Die Brühmaschine 1 enthält eine erste Kammer K1 in Form einer beheizbaren Druckkammer bzw. eines Kessel 3 zur Aufnahme von Wasser, eine Brühkammer 4 zur Aufnahme der Portionskapsel 2, eine Fluidverbindung 5 zwischen der Druckkammer 3 und der Brühkammer 4, ein erstes Aufstech- oder Aufschlitz-Mittel 7 zum Aufstechen oder Aufschlitzen der in die Brühkammer 4 eingeführten Portionskapsel 2 an einem ersten Kapselort KO1 an der Kapseloberfläche in einem unteren Endbereich der Portionskapsel 2, ein zweites Aufstech- oder Aufschlitz-Mittel 8 zum Aufstechen oder Aufschlitzen der in die Brühkammer 4 eingeführten Portionskapsel 2 an einem zweiten Kapselort KO2 an der Kapseloberfläche in einem oberen Endbereich der Portionskapsel 2.

Eine in die Brühkammer 4 eingeführte und an ihren Kapselorten KO1 und KO2 aufgestochene oder aufgeschlitzte Portionskapsel 2 kann mit in der ersten Kammer K1 bzw. Druckkammer 3 erzeugtem heissen Wasser und/oder heissem Wasserdampf von dem ersten Kapselort KO1 zu dem zweiten Kapselort KO2 der Portionskapsel 2 durchströmt werden, um ein am zweiten Kapselort KO2 austretendes heisses Brühgetränk zu erhalten, welches in eine zweite Kammer K2 in Form eines Auffanggefässes strömen kann.

In der Fluidverbindung 5 zwischen der Druckkammer 3 und der Brühkammer 4 ist eine Temperierkammer TK angeordnet, welche mit der Fluidverbindung 5 thermisch gekoppelt ist. Die Temperierkammer TK kann eine thermische Senke (Kühlvorrichtung) sein, welche einen Teil der in die erste Kammer K1 bzw. Druckkammer 3 eingetragene Wärme aus dem Brühwasser abführen kann, bevor dieses in die Brühkammer 4 mit der mit Brühmaterial gefüllten Portionskapsel 2 gelangt. Alternativ kann die Temperierkammer TK eine thermische Quelle (Heizvorrichtung) sein, welche zusätzlich zu der in die erste Kammer K1 bzw. Druckkammer 3 eingetragenen Wärme weitere Wärme in das Brühwasser eintragen kann, bevor dieses in die Brühkammer 4 mit der mit Brühmaterial gefüllten Portionskapsel 2 gelangt.

Im vorliegenden Beispiel ist die Fluidverbindung 5 ein Fluidkanal FK1, der ein erstes Steigrohr bildet und an seinem in die Druckkammer 3 ragenden unteren Ende eine Öffnung O1 hat. In diese kann Brühwasser, welches eine Temperatur von mehr als 100°C und einen Druck von mehr als 1 bar hat, aus der ersten Kammer K1 bzw. der Druckkammer 3 eindringen und über den Fluidkanal FK1 in die Brühkammer 4 gelangen. Die Temperierkammer TK ist über einen Lamellen-Wärmetauscher WT1 mit dem Fluidkanal FK1 thermisch gekoppelt. In der Temperierkammer TK ist ein Phasenwechselmaterial PWM mit einem Schmelzpunkt unter 100°C enthalten. Zwischen der Brühkammer 4 und der zweiten Kammer bzw. dem Auffanggefäss K2 erstreckt sich ein zweiter Fluidkanal FK2, der an seinem Ende eine Öffnung O2 hat, welche in das Auffanggefäss K2 mündet. Der erste Fluidkanal FK1 und ein Teil des zweiten Fluidkanals FK2 erstrecken sich entlang einer vertikalen Geraden G, welche sich durch die Brühkammer 4 erstreckt.

Die Brühkammer 4 zur Aufnahme der Portionskapsel 2 ist in einer Baueinheit 70 enthalten, welche zwischen dem ersten Maschinenteil T1 und dem zweiten Maschinenteil T2 angeordnet ist. Im Verbindungsbereich zwischen dem ersten Maschinenteil T1 und der Baueinheit 70 ist ein erstes Dichtungsmittel in Form eines O-Rings 11 angeordnet. Im Verbindungsbereich zwischen dem zweiten Maschinenteil T2 und der Baueinheit 70 ist ein zweites Dichtungsmittel in Form eines O-Rings 12 angeordnet. Die erste Kammer K1 bzw. die Druckkammer 3 hat eine Öffnung 3, über welche die Kammer K1 mit Wasser befüllt werden kann und welche mittels eines Schraubverschlusses V und eines dritten Dichtungsmittels 13 in Form eines O-Rings 13 abdichtend verschlossen werden kann.

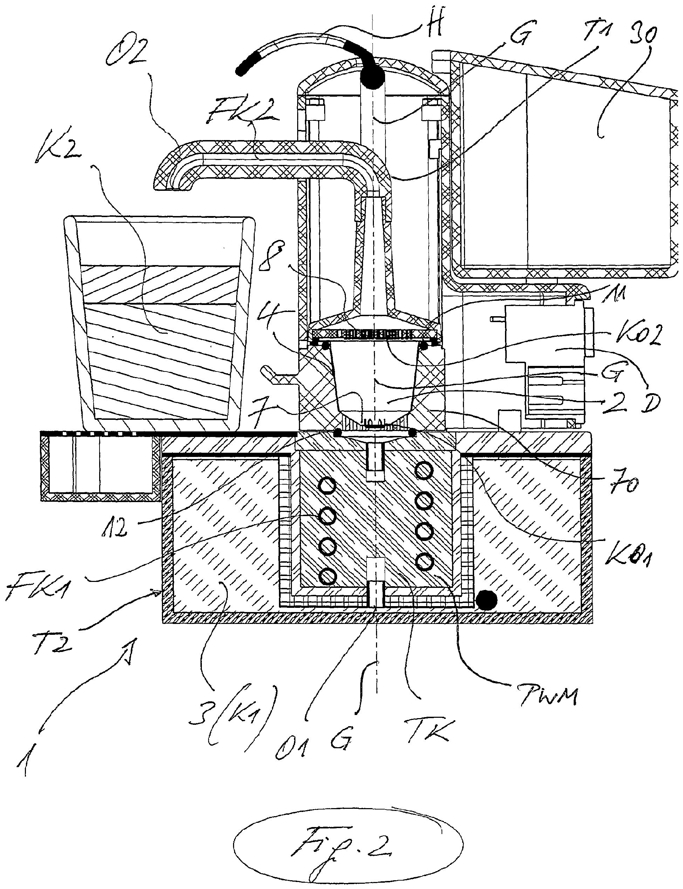

In Fig. 2 ist ein zweites Ausführungsbeispiel der Brühmaschine 1 gezeigt. Sämtliche Elemente in Fig. 2, welche den in Fig. 1 gezeigten Elementen entsprechen, d.h. gleich wie diese oder zu diesen ähnlich sind, tragen in Fig. 2 dieselben Bezugszeichen wie in Fig. 1.

Das zweite Ausführungsbeispiel unterscheidet sich von dem ersten Ausführungsbeispiel dadurch, dass es zusätzlich einen Wassertank (Wasserbehälter bzw. Wasser-Vorratsbehälter) 30 enthält, welcher über eine Dosiervorrichtung D mit der ersten Kammer K1 bzw. der Druckkammer 3 in dosiert in Fluidverbindung gebracht werden kann, um die Druckkammer 3 mit einer vorbestimmten Menge Wasser zu befüllen.

Das zweite Ausführungsbeispiel unterscheidet sich von dem ersten Ausführungsbeispiel ausserdem dadurch, dass es eine Hebelvorrichtung H enthält, mit welcher der erste Maschinenteil T1 zu dem zweiten Maschinenteil T2 hin bewegt werden kann, wodurch das erste Dichtungsmittel 11 und das zweite Dichtungsmittel 12 komprimiert werden und eine Abdichtung der Brühkammer 4 erreicht wird. Die Baueinheit 70 mit der Brühkammer 4 ist als Schublade ausgebildet, welche vor dem Betätigen der Hebelvorrichtung H zum Abdichten der Brühkammer 4 in horizontaler Richtung in die Brühmaschine 1 hinein bewegt und aus ihr heraus bewegt werden kann.

Das zweite Ausführungsbeispiel unterscheidet sich von dem ersten Ausführungsbeispiel ausserdem dadurch, dass es einen Fluidkanal FK1 enthält, welcher sich in Form einer Helix / Schraubenlinie im Innern der Temperierkammer TK erstreckt, in welcher das Phasenwechselmaterial PWM mit einem Schmelzpunkt unter 100°C enthalten ist.

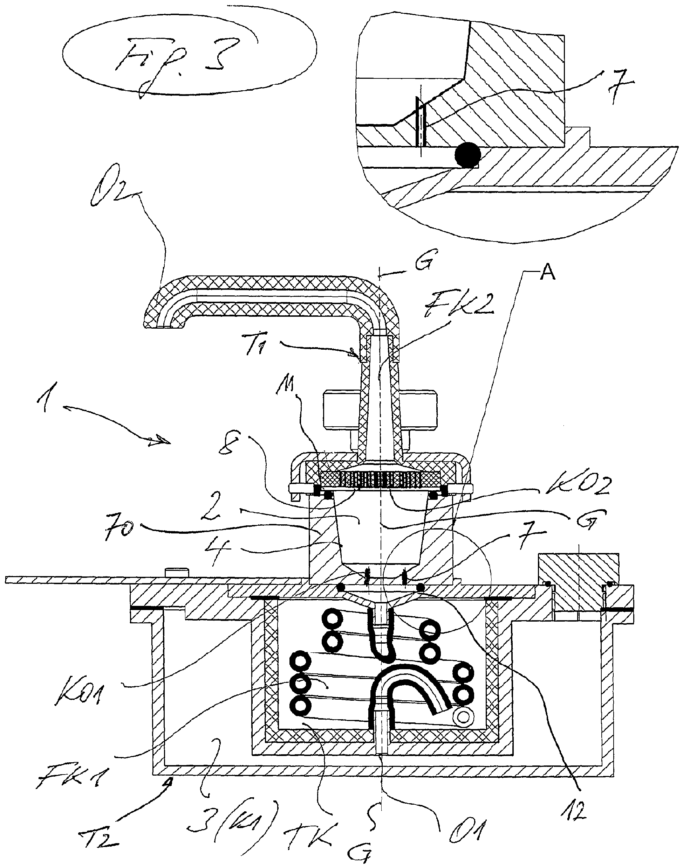

In Fig. 3 ist ein drittes Ausführungsbeispiel der Brühmaschine gezeigt. Sämtliche Elemente in Fig. 3, welche den in Fig. 1 gezeigten Elementen entsprechen, d.h. gleich wie diese oder zu diesen ähnlich sind, tragen in Fig. 3 dieselben Bezugszeichen wie in Fig. 1.

Das dritte Ausführungsbeispiel unterscheidet sich von dem ersten Ausführungsbeispiel ausserdem dadurch, dass es einen Fluidkanal FK1 enthält, welcher sich in Form einer Helix / Schraubenlinie mit abschnittsweise verschiedenen Krümmungsradien im Innern der Temperierkammer TK erstreckt, in welcher das Phasenwechselmaterial PWM mit einem Schmelzpunkt unter 100°C enthalten ist. Der Fluidkanal FK1 ist ein Schlauch aus einem Polymermaterial, insbesondere einem Silikonmaterial. Der Fluidkanal FK1 kann auch ein Panzerschlauch sein.

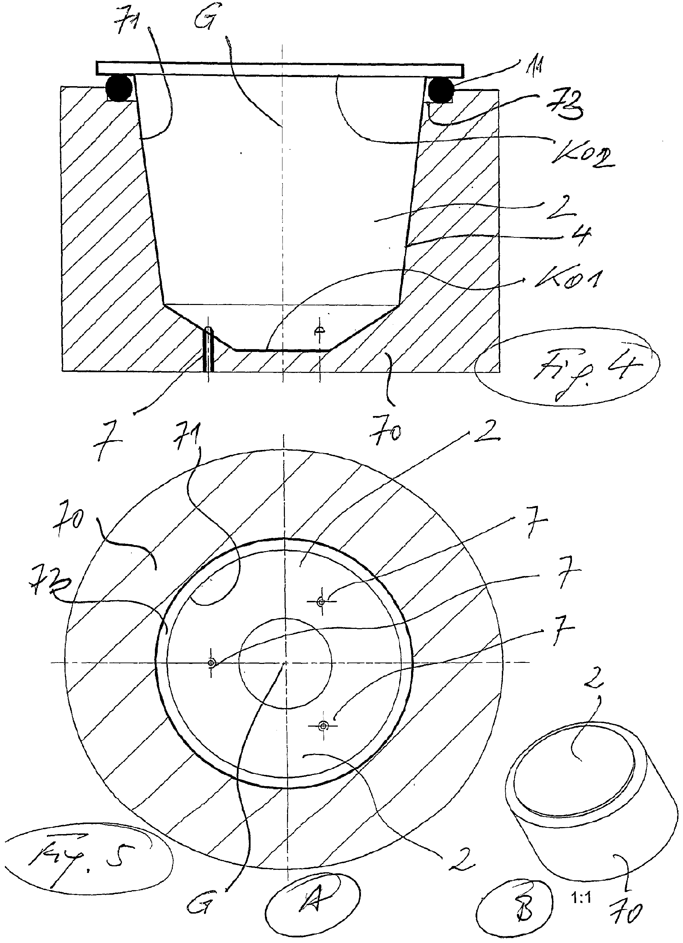

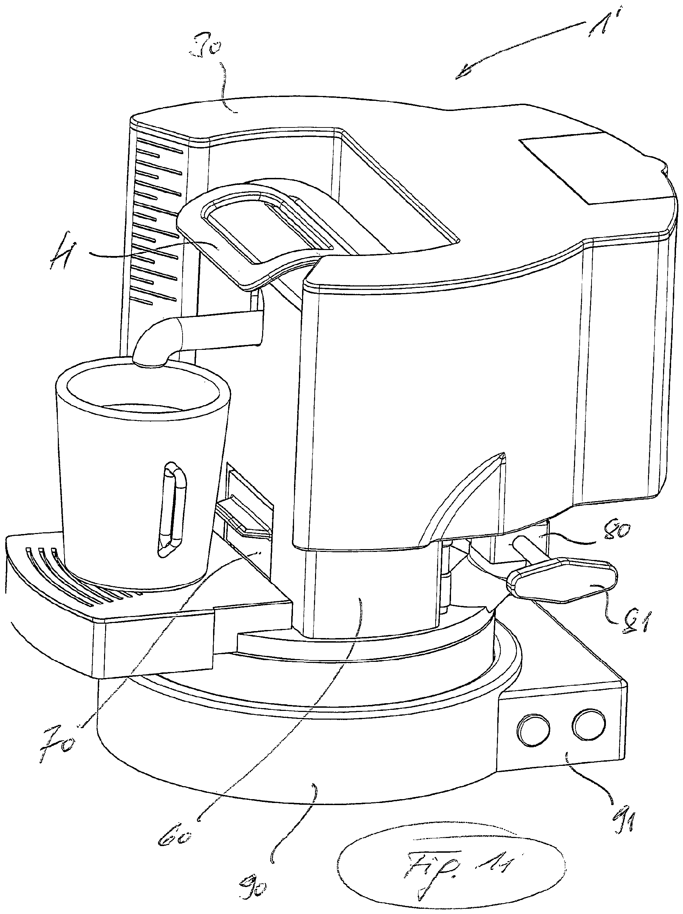

In Fig. 4 ist eine erste Ansicht (Schnittansicht entlang einer die vertikale Gerade G enthaltenden Schnittebene) eines ersten Ausführungsbeispiels der Baueinheit bzw. Komponente 70 der Brühmaschine 1 mit einer Portionskapsel 2 gezeigt. Man erkennt die Baueinheit 70 mit ihrer Aussparung 71, in welche die Portionskapsel 2 eingesetzt ist. Der obere flanschartige Rand der Portionskapsel 2 liegt an einem O-Ring 11 an, welcher wiederum in einer sich entlang des oberen Öffnungsrandes der Aussparung 71 angeordneten ringförmigen Randnut 73 gelagert ist. Das erste Aufstechmittel 7 in Form eines Röhrchens (nur eines ist im Schnitt erkennbar) erstreckt sich von der unteren Oberfläche der Baueinheit 70 durch deren Bodenbereich bis in die Aussparung 71. Das untere Ende des Röhrchens 7 ist mit der unteren Oberfläche der Baueinheit 70 bündig. Das obere Ende des Röhrchens 7 ist abgeschrägt, wodurch eine Spitze gebildet wird, und ragt in die Aussparung 71 hinein. Beim Betätigen der Hebelvorrichtung H (siehe z.B. Fig. 2 oder Fig. 11) wird die Portionskapsel 2 in die Aussparung 71 hineingedrückt. Dabei wird die Portionskapsel 2 an ihrem ersten Kapselort KO1 durch das Röhrchen 7 aufgestochen, und der O-Ring 11 wird komprimiert, wodurch die Brühkammer 4 oben abgedichtet wird. Das zweite Aufstech- oder Aufschlitzmittel 8 zum Aufstechen oder Aufschlitzen der Portionskapsel 2 an ihrem zweiten Kapselort KO2 (siehe z.B. Fig. 1 oder Fig. 2) ist in Fig. 4 nicht gezeigt.

In Fig. 5A ist eine zweite Ansicht (Draufsicht entlang der vertikalen Geraden G) des ersten Ausführungsbeispiels der Baueinheit bzw. Komponente 70 der Brühmaschine 1 ohne Portionskapsel 2 gezeigt. Man erkennt die Baueinheit 70 mit ihrer Aussparung 71, welche sich um die Gerade G herum erstreckt. Ausserdem erkennt man drei Röhrchen 7, welche im Boden der Aussparung 71 gleichmässig verteilt angeordnet sind und jeweils in die Aussparung 71 ragen, sowie die sich am oberen Rand der Aussparung 71 erstreckende ringförmige Randnut 73 (ohne O-Ring).

In Fig. 5B ist eine dritte Ansicht (Perspektivansicht) des ersten Ausführungsbeispiels der Baueinheit bzw. Komponente 70 der Brühmaschine 1 mit einer Portionskapsel 2 gezeigt.

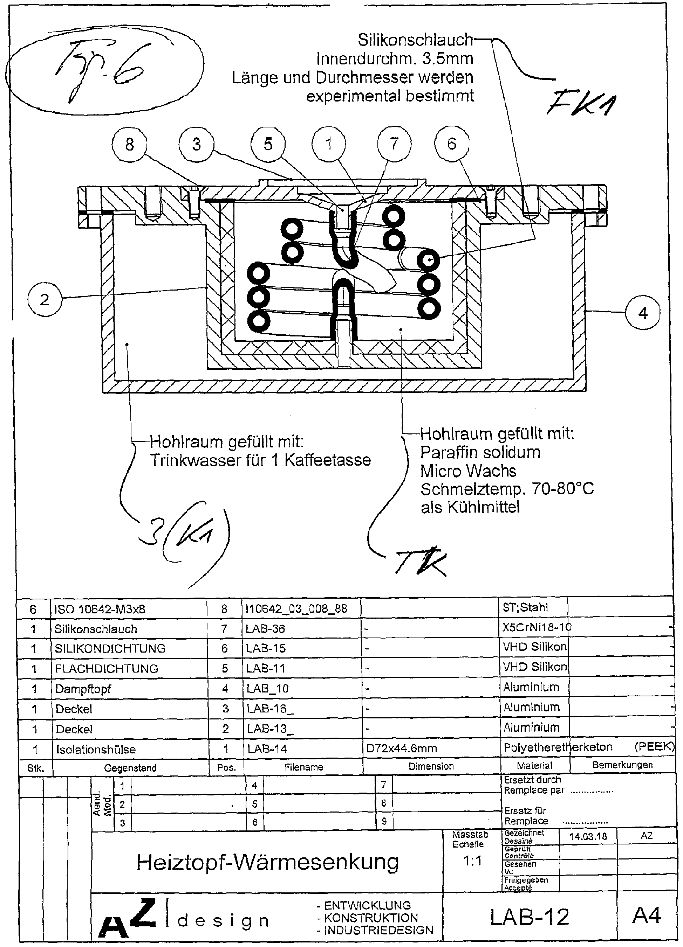

In **Fig. 6** ist eine ausführlichere Darstellung des dritten Ausführungsbeispiels gezeigt. Man erkennt die erste Kammer K1 bzw. Druckkammer 3, welche mit Wasser für eine Portion der herzustellenden Brühgetränks gefüllt ist, sowie die Temperierkammer TK, welche als Phasenwechselmaterial PWM Paraffin oder Wachs enthält. Ausserdem erkennt man den ersten Fluidkanal FK1 in Form eines Silikonschlauches.

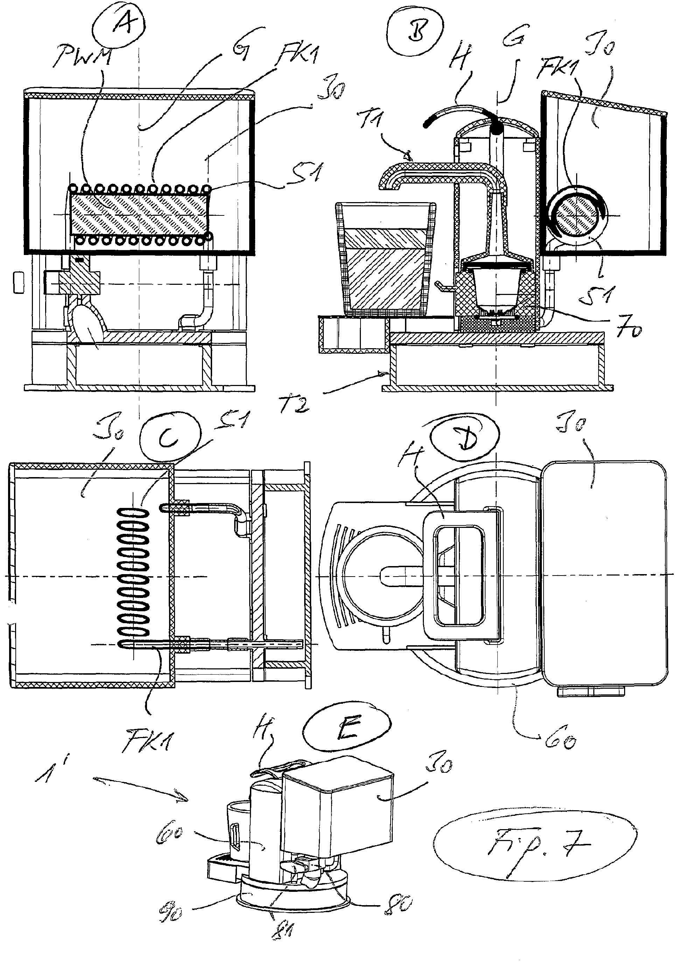

In **Fig. 7A** ist eine erste Ansicht (entlang einer ersten vertikalen Schnittebene) eines vierten Ausführungsbeispiels der Brühmaschine 1 gezeigt. Man erkennt einen Leitungsabschnitt 51 als Teil der Fluidverbindung 5 zwischen der ersten Kammer K1 bzw. Druckkammer 3 und der Portionskapsel 2 in der Brühkammer 4. Der Leitungsabschnitt 51 ist helixartig um eine mit Phasenwechselmaterial PWM gefüllte Packung gewickelt. Sowohl der Leitungsabschnitt 51 als auch die Phasenwechselmaterial-Packung sind in einem Wassertank 30 angeordnet.

In **Fig. 7B** ist eine zweite Ansicht (entlang einer zweiten vertikalen Schnittebene) des vierten Ausführungsbeispiels der Brühmaschine 1 gezeigt. Ausser dem Wassertank 30, dem Leitungsabschnitt 51 der Fluidverbindung 5 und der Phasenwechselmaterial-Packung erkennt man die Hebelvorrichtung H.

In **Fig. 7C** ist eine dritte Ansicht (entlang einer horizontalen Schnittebene) des vierten Ausführungsbeispiels der Brühmaschine 1 gezeigt. Man erkennt den Wassertank 30, den Leitungsabschnitt 51 der Fluidverbindung 5 sowie die Phasenwechselmaterial-Packung.

In **Fig. 7D** ist eine vierte Ansicht (Draufsicht) des vierten Ausführungsbeispiels der Brühmaschine gezeigt. Man erkennt den Wassertank 30, die Hebelvorrichtung H und ein die Brühkammer 4 umgebendes Gehäuse 60.

In **Fig. 7E** ist eine fünfte Ansicht (Perspektivansicht) des vierten Ausführungsbeispiels der Brühmaschine 1 gezeigt. Man erkennt den Wassertank 30, das die Brühkammer 4 umgebende Gehäuse 60 sowie eine Dosiervorrichtung 80 mit einem Dosierventil 81 zwischen dem Wassertank 30 und der ersten Kammer K1 (bzw. Druckkammer 3 bzw. Kessel 90).

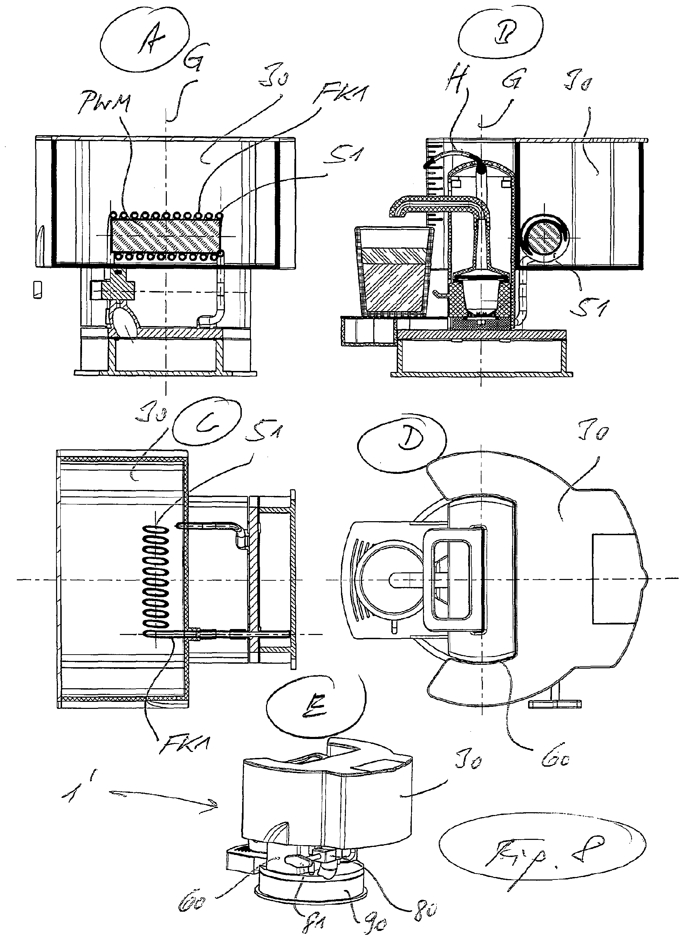

In **Fig. 8A** ist eine erste Ansicht (entlang einer ersten vertikalen Schnittebene) eines fünften Ausführungsbeispiels der Brühmaschine 1 gezeigt. Man erkennt einen Leitungsabschnitt 51 als Teil der Fluidverbindung 5 zwischen der ersten Kammer K1 bzw. Druckkammer 3 und der Portionskapsel 2 in der Brühkammer 4. Der Leitungsabschnitt 51 ist helixartig um eine mit Phasenwechselmaterial PWM gefüllte Packung gewickelt. Sowohl der Leitungsabschnitt 51 als auch die Phasenwechselmaterial-Packung sind in einem Wassertank 30 angeordnet.

In **Fig. 8B** ist eine zweite Ansicht (entlang einer zweiten vertikalen Schnittebene) des fünften Ausführungsbeispiels der Brühmaschine 1 gezeigt. Ausser dem Wassertank 30, dem Leitungsabschnitt 51 der Fluidverbindung 5 und der Phasenwechselmaterial-Packung erkennt man die Hebelvorrichtung H.

In **Fig. 8C** ist eine dritte Ansicht (entlang einer horizontalen Schnittebene) des fünften Ausführungsbeispiels der Brühmaschine 1 gezeigt. Man erkennt den Wassertank 30, den Leitungsabschnitt 51 der Fluidverbindung 5 sowie die Phasenwechselmaterial-Packung.

In **Fig. 8D** ist eine vierte Ansicht (Draufsicht) des fünften Ausführungsbeispiels der Brühmaschine gezeigt. Man erkennt den Wassertank 30, die Hebelvorrichtung H und ein die Brühkammer 4 umgebendes Gehäuse 60.

In **Fig. 8E** ist eine fünfte Ansicht (Perspektivansicht) des fünften Ausführungsbeispiels der Brühmaschine 1 gezeigt. Man erkennt den Wassertank 30, das die Brühkammer 4 umgebende Gehäuse 60 sowie eine Dosiervorrichtung 80 mit einem Dosierventil 81 zwischen dem Wassertank 30 und der ersten Kammer K1 (bzw. Druckkammer 3 bzw. Kessel 90).

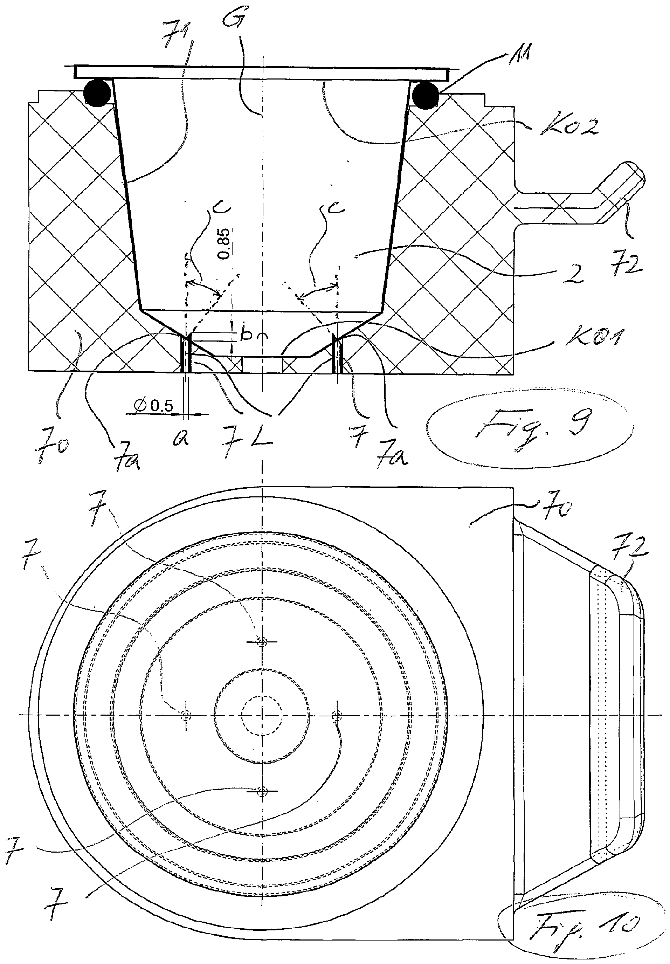

In **Fig. 9** ist eine erste Ansicht (Schnittansicht entlang einer vertikalen Schnittebene) eines zweiten Ausführungsbeispiels der Baueinheit bzw. Komponente 70 des dritten oder vierten Ausführungsbeispiels der Brühmaschine 1 gezeigt. Die Baueinheit 70 ist eine Schublade für loses oder gekapseltes Brühmaterial. Die Baueinheit 70 hat einen Aussparung 71 und einen Handgriff 72. Sämtliche Elemente in Fig. 9, welche den in Fig. 4 gezeigten Elementen entsprechen, d.h. gleich wie diese oder zu diesen ähnlich sind, tragen in Fig. 9 dieselben Bezugszeichen wie in Fig. 4.

In **Fig. 10** ist eine zweite Ansicht (Draufsicht) des zweiten Ausführungsbeispiels der Baueinheit bzw. Komponente 70 des dritten oder vierten Ausführungsbeispiels der Brühmaschine gezeigt, und zwar ohne Portionskapsel.

In **Fig. 11** ist eine vergrösserte Ansicht des fünften Ausführungsbeispiels der Brühmaschine 1 gezeigt, und zwar ähnlich wie Fig. 8E.

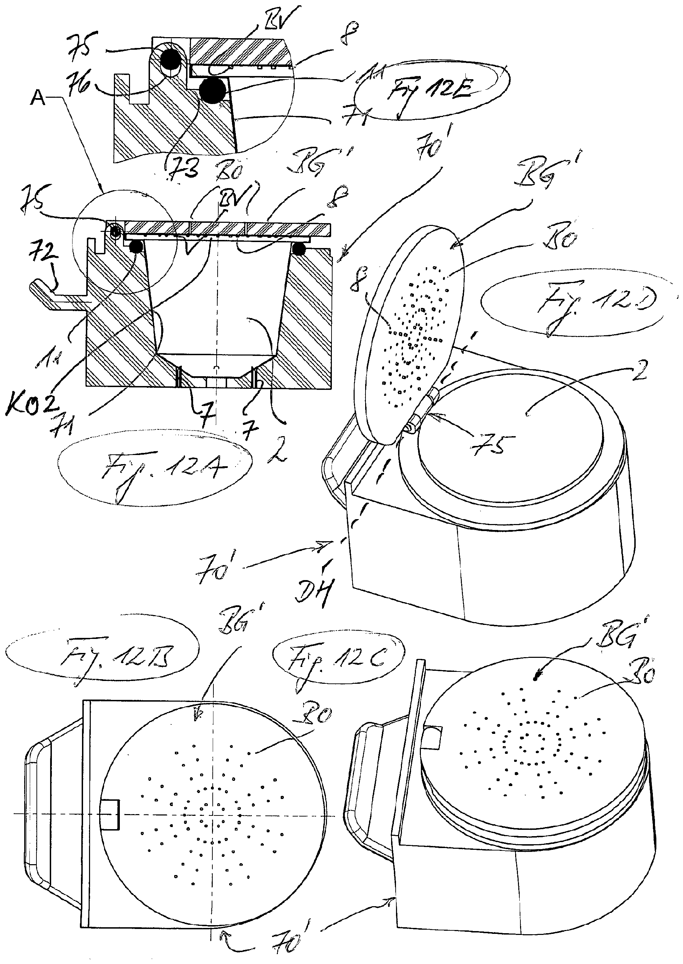

In **Fig. 12A** ist eine erste Ansicht (Schnittansicht entlang einer vertikalen Schnittebene) eines dritten Ausführungsbeispiels der Baueinheit bzw. Komponente 70' der Brühmaschine 1 gezeigt. Die Baueinheit 70' ist als Schublade mit einer Aussparung 71 und einem Handgriff 72 ausgebildet. Man erkennt eine in der Aussparung 71 sitzende Portionskapsel 2 und das erste Aufstechmittel 7 in Form mehrerer Röhrchen 7, welche in die Aussparung 71 ragen. Ein Barriereglied BG' in Form einer Platte mit einer Vielzahl von Barriere-Öffnungen BO ist an der Baueinheit 70' mittels eines in einem Gelenklager 76 drehbar gelagerten Gelenkstifts 75 angelenkt und nach oben und unten verschwenkbar, wie in Fig. 12E ausführlicher gezeigt ist. In Fig. 12A ist das Barriereglied BG' an die Aussparung 71 und das Dichtungsmittel 11 nach unten herangeschwenkt. In dieser **Betriebsstellung** bildet das Barriereglied BG' einen Teil der Wand der Brühkammer 4. An seiner der Aussparung 71 zugewandten Seite hat das Barriereglied BG' ausserdem eine Vielzahl kantiger Erhebungen bzw. Barriere-Vorsprünge BV, welche in ihrer Gesamtheit das zweite Aufstech- oder Aufschlitzmittel 8 bilden. Durch die Anzahl, die jeweilige Grösse und die Anordnung der Barriere-Öffnungen BO sowie durch die Anzahl, die jeweilige Form und die Anordnung der Barriere-Vorsprünge BV wird der Wert des Strömungswiderstands der nach dem Aufstechen bzw. Aufschlitzen der Portionskapsel 2 an ihrem zweiten Kapselort KO2 hergestellten Vielzahl von Löchern bestimmt.

In **Fig. 12B** ist eine zweite Ansicht (Draufsicht) des dritten Ausführungsbeispiels der Baueinheit bzw. Komponente 70' der Brühmaschine 1 gezeigt. Man erkennt die Vielzahl von Barriere-Öffnungen BO in dem Barriereglied BG', welches an die Aussparung 71 herangeschwenkt ist (Betriebsstellung).

In **Fig. 12C** ist eine dritte Ansicht (Perspektivansicht) des dritten Ausführungsbeispiels der Baueinheit bzw. Komponente 70' der Brühmaschine 1 gezeigt. Man erkennt die Vielzahl von Barriere-Öffnungen BO in dem Barriereglied BG', welches an die Aussparung 71 herangeschwenkt ist (Betriebsstellung).

In **Fig. 12D** ist eine vierte Ansicht (Perspektivansicht) des dritten Ausführungsbeispiels der Baueinheit bzw. Komponente 70' der Brühmaschine 1 gezeigt. Man erkennt das nach oben von der Aussparung 71 weggeschwenkte Barriereglied BG' mit seinen kantigen Erhebungen bzw. Barriere-Vorsprüngen BV.

In **Fig. 12E** ist eine fünfte Ansicht (vergrösserter Ausschnitt A aus der Schnittansicht entlang der vertikalen Schnittebene von Fig. 12A) des dritten Ausführungsbeispiels der Baueinheit bzw. Komponente 70' der Brühmaschine 1 gezeigt. Man erkennt den Gelenkstift 75 und das dazu komplementäre Gelenklager 76. Das Gelenklager 76 ist in hat ein vertikales Spiel. Dadurch wird einerseits ein Verschwenken des Barriereglieds BG' um eine horizontale Drehachse DH und andererseits ein Verschieben des Barriereglied BG' nach unten und somit ein Komprimieren des ersten Dichtungsmittels 11 ermöglicht. Ausserdem erkannt man die Barriere-Vorsprünge BV an der zur Aussparung 71 weisenden Unterseite des Barriereglieds BG'.

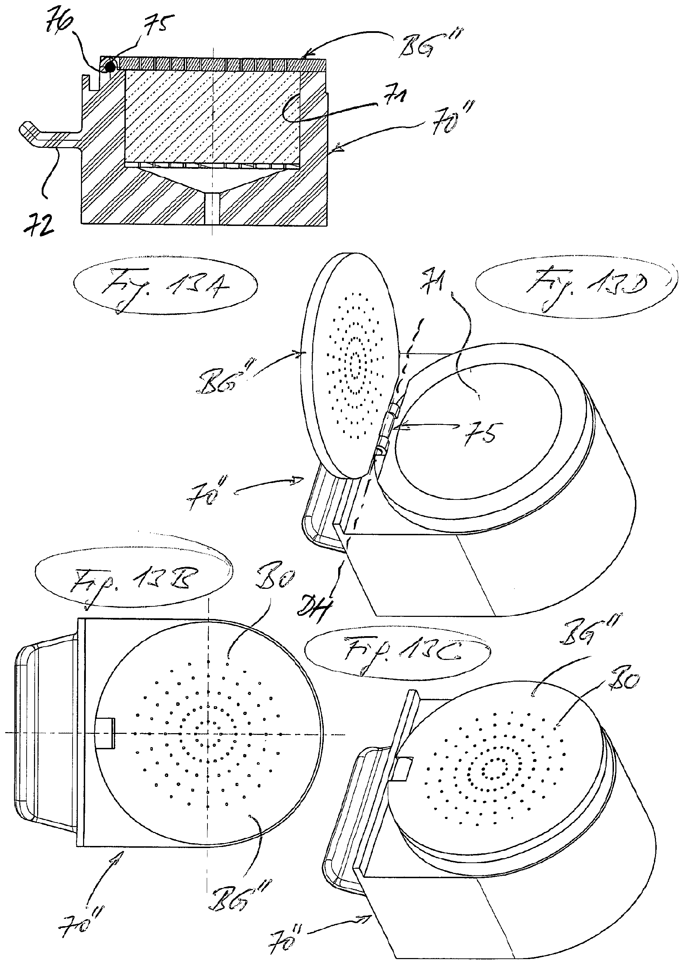

In **Fig. 13A** ist eine erste Ansicht (Schnittansicht entlang einer vertikalen Schnittebene) eines vierten Ausführungsbeispiels der Baueinheit bzw. Komponente 70" der Brühmaschine 1 gezeigt. Die Baueinheit 70" ist als Schublade mit einer Aussparung 71 und einem Handgriff 72 ausgebildet. Ein Barriereglied BG" in Form einer Platte mit einer Vielzahl von Barriere-Öffnungen BO ist an der Baueinheit 70" mittels eines in einem Gelenklager 76 drehbar gelagerten Gelenkstifts 75 angelenkt und nach oben und unten verschwenkbar. In Fig. 13A ist das Barriereglied BG" an die Aussparung 71 nach unten herangeschwenkt. In dieser **Betriebsstellung** bildet das Barriereglied BG" einen Teil der Wand der Brühkammer 4. Durch die Anzahl, die jeweilige Grösse und die Anordnung der Barriere-Öffnungen BO wird der Wert des Strömungswiderstands der Brühkammer 4 bestimmt.

In **Fig. 13B** ist eine zweite Ansicht (Draufsicht) des vierten Ausführungsbeispiels der Baueinheit bzw. Komponente 70" der Brühmaschine 1 gezeigt. Man erkennt die Vielzahl von Barriere-Öffnungen BO in dem Barriereglied BG", welches an die Aussparung 71 herangeschwenkt ist (Betriebsstellung).

In **Fig. 13C** ist eine dritte Ansicht (Perspektivansicht) des vierten Ausführungsbeispiels der Baueinheit bzw. Komponente 70" der Brühmaschine 1 gezeigt. Man erkennt die Vielzahl von Barriere-Öffnungen BO in dem Barriereglied BG", welches an die Aussparung 71 herangeschwenkt ist (Betriebsstellung).

In **Fig. 13D** ist eine vierte Ansicht (Perspektivansicht) des vierten Ausführungsbeispiels der Baueinheit bzw. Komponente 70" der Brühmaschine 1 gezeigt. Man erkennt das nach oben von der Aussparung 71 weggeschwenkte Barriereglied BG".

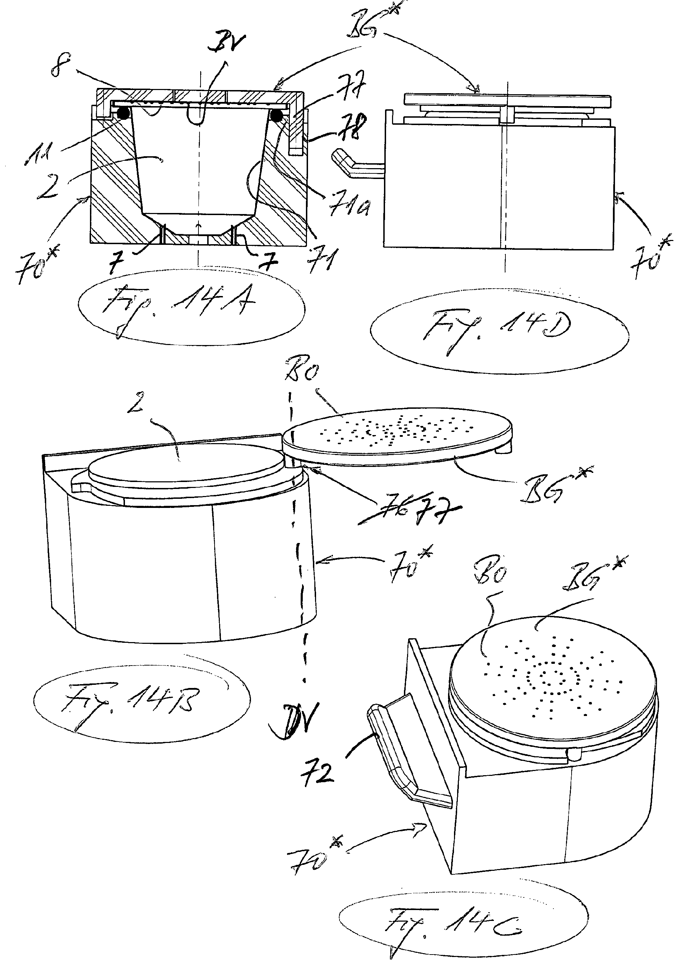

In **Fig. 14A** ist eine erste Ansicht (Schnittansicht entlang einer vertikalen Schnittebene) eines fünften Ausführungsbeispiels der Baueinheit bzw. Komponente 70* der Brühmaschine 1 gezeigt. Die Baueinheit 70* ist als Schublade mit einer Aussparung 71 und einem Handgriff 72 ausgebildet. Man erkennt eine in der Aussparung 71 sitzende Portionskapsel 2 und das erste Aufstechmittel 7 in Form mehrerer Röhrchen 7, welche in die Aussparung 71 ragen. Ein Barriereglied BG* in Form einer Platte mit einer Vielzahl von Barriere-Öffnungen BO ist an der Baueinheit 70* mittels eines in einem Gelenklager 78 drehbar gelagerten Gelenkstifts 77 angelenkt und seitlich verschwenkbar. In Fig. 14A ist das Barriereglied BG* an die Aussparung 71 und das Dichtungsmittel 11 herangeschwenkt. In dieser **Betriebsstellung** bildet das Barriereglied BG* einen Teil der Wand der Brühkammer 4. An seiner der Aussparung 71 zugewandten Seite hat das Barriereglied BG* ausserdem eine Vielzahl kantiger Erhebungen bzw. Barriere-Vorsprünge BV, welche in ihrer Gesamtheit das zweite Aufstech- oder Aufschlitzmittel 8 bilden. Durch die Anzahl, die jeweilige Grösse und die Anordnung der Barriere-Öffnungen BO sowie durch die Anzahl, die jeweilige Form und die Anordnung der Barriere-Vorsprünge BV wird der Wert des Strömungswiderstands der nach dem Aufstechen bzw.

Aufschlitzen der Portionskapsel 2 an ihrem zweiten Kapselort KO2 hergestellten Vielzahl von Löchern bestimmt.

In **Fig. 14B** ist eine zweite Ansicht (Perspektivansicht) des fünften Ausführungsbeispiels der Baueinheit bzw. Komponente 70* der Brühmaschine 1 gezeigt. Man erkennt die Vielzahl von Barriere-Öffnungen BO in dem Barriereglied BG*, welches von der Aussparung 71 weggeschwenkt ist.

In **Fig. 14C** ist eine dritte Ansicht (Perspektivansicht) des fünften Ausführungsbeispiels der Baueinheit bzw. Komponente 70* der Brühmaschine 1 gezeigt. Man erkennt die Vielzahl von Barriere-Öffnungen BO in dem Barriereglied BG*, welches an die Aussparung 71 herangeschwenkt ist (Betriebsstellung).

In **Fig. 14D** ist eine vierte Ansicht (Seitenansicht) des fünften Ausführungsbeispiels der Baueinheit bzw. Komponente 70* der Brühmaschine 1 gezeigt. Man erkennt das an die Aussparung 71 herangeschwenkte Barriereglied BG*.

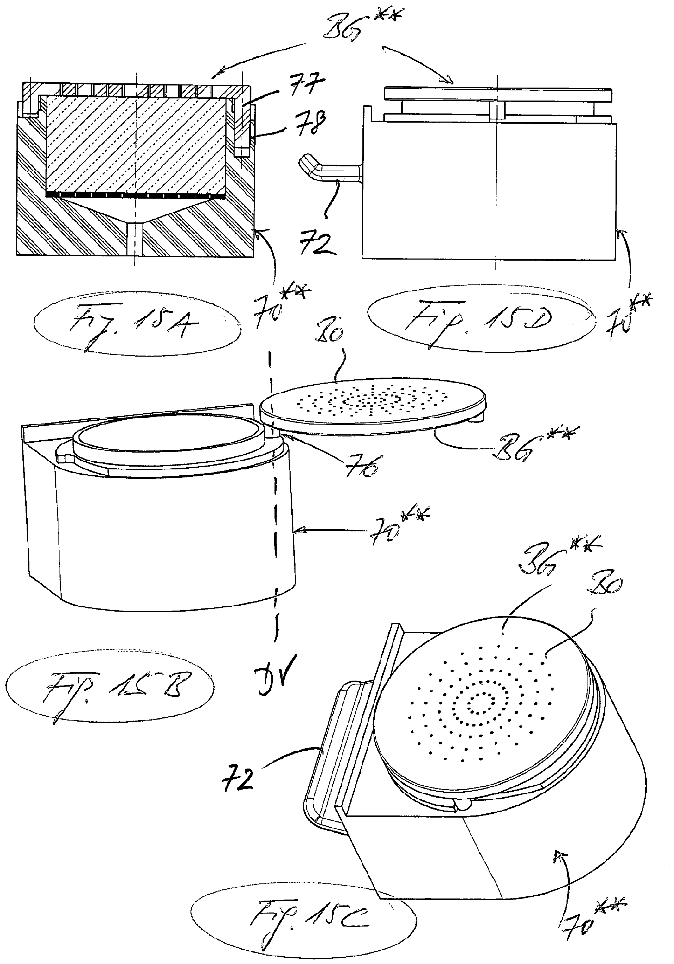

In **Fig. 15A** ist eine erste Ansicht (Schnittansicht entlang einer vertikalen Schnittebene) eines sechsten Ausführungsbeispiels der Baueinheit bzw. Komponente 70** der Brühmaschine 1 gezeigt. Die Baueinheit 70** ist als Schublade mit einer Aussparung 71 und einem Handgriff 72 ausgebildet. Ein Barriereglied BG** in Form einer Platte mit einer Vielzahl von Barriere-Öffnungen BO ist an der Baueinheit 70** mittels eines in einem Gelenklager 78 drehbar gelagerten Gelenkstifts 77 angelenkt und seitlich verschwenkbar. In Fig. 15A ist das Barriereglied BG** an die Aussparung 71 herangeschwenkt. In dieser **Betriebsstellung** bildet das Barriereglied BG** einen Teil der Wand der Brühkammer 4. Durch die Anzahl, die jeweilige Grösse und die Anordnung der Barriere-Öffnungen BO wird der Wert des Strömungswiderstands der Brühkammer 4 bestimmt.

In **Fig. 15B** ist eine zweite Ansicht (Perspektivansicht) des sechsten Ausführungsbeispiels der Baueinheit bzw. Komponente 70** der Brühmaschine 1 gezeigt. Man erkennt die Vielzahl von Barriere-Öffnungen BO in dem Barriereglied BG**, welches von der Aussparung 71 weggeschwenkt ist.

In **Fig. 15C** ist eine dritte Ansicht (Perspektivansicht) des sechsten Ausführungsbeispiels der Baueinheit bzw. Komponente 70** der Brühmaschine 1 gezeigt. Man erkennt die Vielzahl von Barriere-Öffnungen BO in dem Barriereglied BG**, welches an die Aussparung 71 herangeschwenkt ist (Betriebsstellung).

In **Fig. 15D** ist eine vierte Ansicht (Seitenansicht) des sechsten Ausführungsbeispiels der Baueinheit bzw. Komponente 70** der Brühmaschine 1 gezeigt. Man erkennt das an die Aussparung 71 herangeschwenkte Barriereglied BG**.

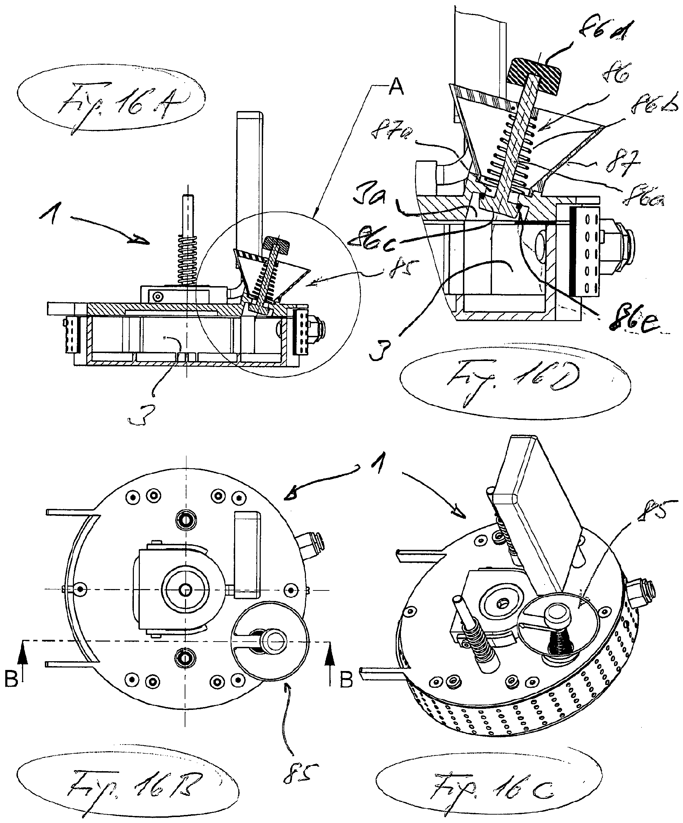

In **Fig. 16A** ist eine erste Ansicht (Schnittansicht entlang einer vertikalen Schnittebene B-B in Fig. 16B) eines Wasser-Einfüllbereichs 85 sowie weiterer Komponenten eines siebten Ausführungsbeispiels der Brühmaschine 1 gezeigt. Der Wasser-Einfüllbereich 85 ermöglicht das Einfüllen von Wasser in die Druckkammer bzw. den Kessel 3.

In **Fig. 16B** ist eine zweite Ansicht (Draufsicht) des Wasser-Einfüllbereichs 85 sowie weiterer Komponenten des siebten Ausführungsbeispiels der Brühmaschine 1 gezeigt.

In **Fig. 16C** ist eine dritte Ansicht (Perspektivansicht) des Wasser-Einfüllbereichs 85 sowie weiterer Komponenten des siebten Ausführungsbeispiels der Brühmaschine 1 gezeigt.

In **Fig. 16D** ist eine vierte Ansicht (vergrösserter Ausschnitt A aus der Schnittansicht entlang der vertikalen Schnittebene von Fig. 16A) des Wasser-Einfüllbereichs 85 sowie weiterer Komponenten des siebten Ausführungsbeispiels der Brühmaschine 1 gezeigt. Man erkennt ein Wasser-Einfüllventil 86, mit welchem eine Mündungsöffnung 87a der Druckkammer bzw. des Kessels 3 geöffnet und geschlossen werden kann. Das Wasser-Einfüllventil 86 enthält einen Ventilstössel 86a, eine Ventilfeder 86b, einen Ventilkopf 86c am kesselseitigen Ende des Ventilstössels und einen Ventil-Druckknopf 86d. Die Ventilfeder 86b drückt den Ventilkopf 86c gegen einen Rand einer Mündungsöffnung 87a eines Wasser-Einfülltrichters 87, wobei ein am Rand der Mündungsöffnung 87a und/oder an dem Ventilkopf 86c angeordnetes Dichtungsmittel in Form eines O-Rings 86e komprimiert wird. Dadurch ist die Druckkammer bzw. der Kessel 3 hermetisch verschlossen. Zum Befüllen der Druckkammer bzw. des Kessels 3 mit Wasser drückt man mit einem Finger gegen den Ventil-Druckknopf 86d, wodurch der Ventilstössel 86a mit seinem Ventilkopf 86c durch die Mündungsöffnung 87a in die Druckkammer 3 hinein bewegt und die Ventilfeder 86b komprimiert wird. Nun kann man eine abgemessene Menge Wasser über den Wasser-Einfülltrichter 87 in die Druckkammer bzw. den Kessel 3 einfüllen. Wenn man den Ventil-Druckknopf 86d loslässt, drückt die Ventilfeder 86b den Ventilstössel 86a mit seinem Ventilkopf 86c wieder in die hermetisch abdichtende Stellung zurück. Man kann nun das Wasser im Kessel 3 erhitzen und den Brühvorgang auslösen.

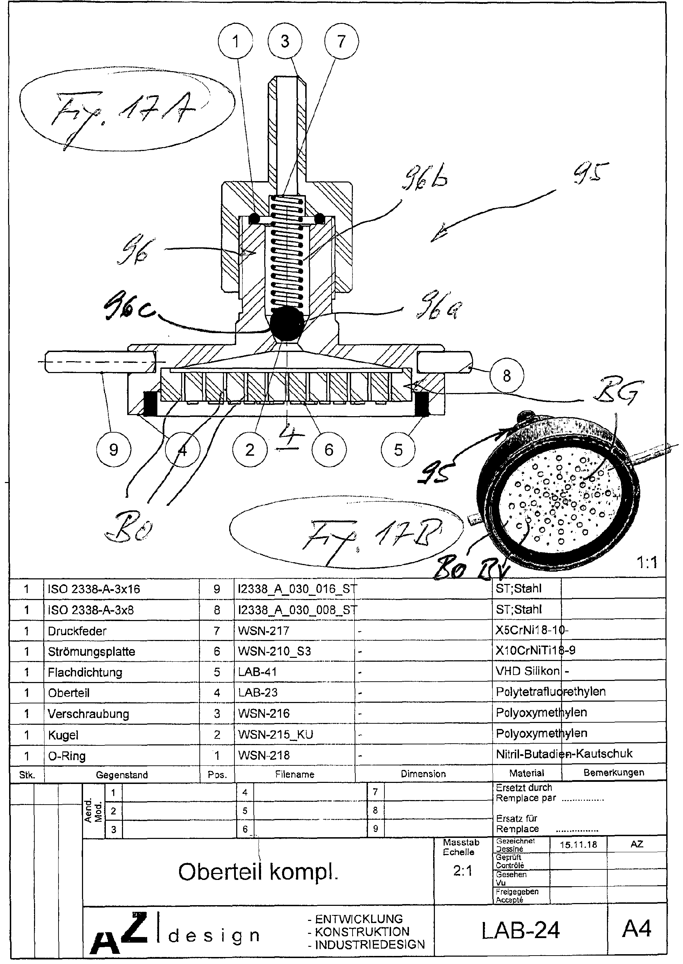

In **Fig. 17A** ist eine erste Ansicht (Schnittansicht entlang einer vertikalen Schnittebene) eines Heissgetränk-Austrittsbereichs 95 eines achten Ausführungsbeispiels der Brühmaschine 1 gezeigt. Man erkennt ein Überdruckventil 96, welches stromab von dem die Brühkammer 4 begrenzenden und die Barriere-Öffnungen BO aufweisenden Barriereglied BG angeordnet ist. Das Überdruckventil 96 wird durch eine Ventilkugel 96a, eine Ventilfeder 96b und einen Ventilsitz 96c gebildet. Die Ventilfeder 96b drückt die Ventilkugel 96a gegen den Ventilsitz 96c, wodurch das Überdruckventil 96 geschlossen ist. Wenn das Wasser im Kessel 3 erhitzt wird, steigt der Druck des Wassers und des Dampfes im Kessel 3 nach und nach an. Wenn der Dampfdruck im Kessel 3 ausreichend hoch ist, öffnet in der Brühkammer 4 aufgestautes Brühgetränk das Überdruckventil 96. Das schon in der Brühkammer aufgestaute und durch weiteres heisses Wasser aus dem Kessel 3 nach und nach gebrühte Brühgetränk beginnt durch das Überdruckventil 96 aus der Brühmaschine 1 auszuströmen bis die abgemessene Menge Wasser aus dem Kessel 3 die Brühkammer 4 vollständig durchströmt hat. Ein kleiner Teil des abgemessenen Brühwassers verbleibt im Brühmaterial, und ein anderer kleiner Teil des abgemessenen Brühwassers verdampft.

In **Fig. 17B** ist eine zweite Ansicht (Perspektivansicht) des Heissgetränk-Austrittsbereichs 95 des achten Ausführungsbeispiels der Brühmaschine 1 gezeigt. Man erkennt das Barriereglied BG mit seinen Barriere-Öffnungen BO und Barriere-Vorsprüngen BV.

### Beispiel:

Zum Brühen eines Heissgetränks wird eine Portionskapsel 2, welche ein Brühmaterial enthält, in die Baueinheit 70 eingesetzt. Die Baueinheit 70, welche die Brühkammer 4 enthält, wird dann in die Brühmaschine 1, 1' geschoben. Über eine Hebelvorrichtung H werden dann die Dichtungsmittel 11 und 12 komprimiert, wodurch die Brühkammer 4 abgedichtet wird. Dabei wird die dünne Kapselwand der Portionskapsel 2 mittels der Röhrchen 7 angestochen und/oder angeritzt bzw. zumindest partiell aufgestochen. Ein vollständiges Öffnen des angestochenen Bereichs der Kapselwand erfolgt ggfs. anschliessend durch Fluiddruck.

Für das Herstellen von "MOKESSO", d.h. einem Heissgetränk, dessen Eigenschaften einem Moka oder einem Espresso entsprechen oder dessen Eigenschaften zwischen denen von Moka und Espresso liegen, wird eine Portion Wasser, d.h. ein "Wasserwurm", welcher sich durch den Fluidkanal FK1 erstreckt, durch diesen mittels Dampfdrucks bis zur Brühkammer 4 hindurchgedrückt, wodurch ein MOKESSO-Heissgetränk erzeugt wird. Der Wasserwurm hat ein Kopfende, welches sich stromauf von der Brühkammer 4 befindet, und ein Schwanzende, welches sich am Austritt des Kessels 3 und am stromaufseitigen Eintritt des Fluidkanals FK1 befindet. Die Kopftemperatur am Kopfende des Wasserwurms liegt vorzugsweise zwischen 90°C und 100°C, und die Schwanztemperatur am Schwanzende des Wasserwurms liegt vorzugsweise zwischen 130°C und 180°C bei einem Druck (Wasser-Dampfdruck) von ca. 3bar bis 15bar.

Die "Antriebsdruck-Bedingungen", d.h. die Schwanztemperatur und der Schwanzdruck des Wasserwurms, werden in der als Kessel bzw. Druckkessel ausgebildeten Heizkammer bzw. Druckkammer 3 erzeugt.

Die "Brühkammer-Bedingungen", d.h. die Brühtemperatur und der Brühdruck des Wasserwurms, werden in der Temperierkammer TK erzeugt.

Die Verweilzeit des heissen Wassers und/oder Dampfes in der Brühkammer 4 wird u.a. durch den Druck in der Druckkammer 3, durch die Geometrie (Länge, Form und Fläche des Querschnitts) des Fluidkanals FK1 und die dadurch definierte Geometrie des Wasserwurms, sowie durch die Grösse der Kapselöffnung an den aufgeritzten oder angeritzten Stellen der Portionskapsel 2 bestimmt.

Die Verweilzeit des heissen Wassers und/oder Dampfes in der Brühkammer 4 kann ausserdem durch die Einstellung des Überdruckventils 96 beeinflusst werden.

### Bezugszeichenliste

- 1: Brühmaschine (mit Temperierkammer)
- 1': Brühmaschine (mit Temperierkammer als thermischer Senke)
- 2: Portionskapsel
- 3: Druckkammer, Kessel
- 4: Brühkammer
- 5: Fluidverbindung
- 5': weitere Fluidverbindung (zwischen 30 und 3)
- 7: erstes Aufstech- oder Aufschlitzmittel, insbesondere Röhrchen
- 7a: Ende von 7 (in 71 hinein ragend)
- 8: zweites Aufstech- oder Aufschlitzmittel
- 11: erstes Dichtungsmittel (zwischen T1 und 70)
- 12: zweites Dichtungsmittel (zwischen T2 und 70)
- 13: drittes Dichtungsmittel (zwischen V und 3)
- 30: Wasserbehälter, Wasser-Vorratsbehälter, Wassertank
- 51: Leitungsabschnitt innerhalb des Wasserbehälters
- 60: Gehäuse, welches die Brühkammer umgibt
- 70: Baueinheit, in welcher die Brühkammer enthalten ist
- 70': Baueinheit (für Portionskapsel, mit hochklappbarem Barriereglied BG')
- 70": Baueinheit (für loses Brühmaterial und mit hochklappbarem Barriereglied BG")
- 70*: Baueinheit (für Portionskapsel, mit verschwenkbarem Barriereglied BG*)
- 70**: Baueinheit (für loses Brühmaterial, mit verschwenkbarem Barriereglied BG**)
- 71: Aussparung (zur Aufnahme von Portionskapsel oder losem Brühmaterial)
- 72: Handgriff
- 73: ringförmige Randnut (für 11)
- 75: Gelenkstift
- 76: Gelenklager
- DH: horizontale Drehachse zur Anlenkung von BG'/BG" an 70'/70")
- 77: Gelenkstift
- 78: Gelenklager
- DV: vertikale Drehachse zur Anlenkung von BG*/BG** an 70*/70**)
- 85: Wasser-Einfüllbereich
- 86: Wasser-Einfüllventil
- 86a: Ventilstössel
- 86b: Ventilfeder, Federglied
- 86c: Ventilkopf
- 86d: Ventil-Druckknopf
- 86e: O-Ring, Dichtungsmittel
- 87: Wasser-Einfülltrichter
- 87a: Mündungsöffnung
- 95: Heissgetränk-Austrittsbereich
- 96: Überdruckventil
- 96a: Ventilkugel
- 96b: Ventilfeder, Federglied
- 96c: Ventilsitz
- BG: Barriereglied
- BG': Barriereglied (hochklappbar)
- BG": Barriereglied (hochklappber)
- BG*: Barriereglied (verschwenkbar)
- BG**: Barriereglied (verschwenkbar)
- BO: Barriere-Öffnungen
- BV: Barriere-Vorsprünge
- G: Gerade (orthogonal zur Einschubsebene von 70), z.B. Symmetrieachse
- L: Längsachse von 7
- a: Innendurchmesser von 7
- b: Eindringtiefe von 7 in 71 hinein
- c: Winkel der Abschrägung von 7a
- H: Hebelvorrichtung
- KO1: erster Kapselort
- KO2: zweiter Kapselort
- K1: erste Kammer (Druckkammer, Kessel)
- K2: zweite Kammer (Aufnahmegefäss)
- TK: Temperierkammer, insbesondere thermische Senke
- FK1: erster Fluidkanal (erstes Steigrohr)
- FK2: zweiter Fluidkanal (zweites Steigrohr)
- O1: Öffnung am Ende des ersten Steigrohrs (in 3 hinein ragend)
- O2: Öffnung am Ende des zweiten Steigrohrs (in K2 ragend oder oberhalb von K2)
- O3: Öffnung zum Befüllen von K1 / 3
- V: Schraubverschluss
- D: Dosiervorrichtung
- PWM: Phasenwechselmaterial
- PWK: Phasenwechselmaterial-Kapsel
- T1: erster Maschinenteil
- T2: zweiter Maschinenteil
- WT1: erster Wärmetauscher (zwischen 5 und TK)
- WT2: zweiter Wärmetauscher (zwischen 5' und TK)

## Patentansprüche

1. **Brühmaschine** (1, 1'), in welche man eine ein Brühmaterial enthaltende Portionskapsel (2) einführen kann, um ein heisses Brühgetränk herzustellen, wobei die Brühmaschine aufweist:
- eine beheizbare Druckkammer (3) zur Aufnahme von Wasser
- eine Brühkammer (4) zur Aufnahme der Portionskapsel (2);
- eine Fluidverbindung (5) zwischen der Druckkammer (3) und der Brühkammer (4);
- ein erstes Aufstech- oder Aufschlitz-Mittel (7) zum Aufstechen oder Aufschlitzen der in die Brühkammer eingeführten Portionskapsel (2) an einem ersten Kapselort (KO1) an der Kapseloberfläche;
- ein zweites Aufstech- oder Aufschlitz-Mittel (8) zum Aufstechen oder Aufschlitzen der in die Brühkammer eingeführten Portionskapsel (2) an einem zweiten Kapselort (KO2) an der Kapseloberfläche;
- wobei die in die Brühkammer (4) eingeführte Portionskapsel (2) mit in der Druckkammer erzeugtem heissen Wasser und/oder heissem Wasserdampf von dem ersten Kapselort (KO1) zu dem zweiten Kapselort (KO2) der Portionskapsel (2) durchströmt werden kann, um ein am zweiten Kapselort (KO2) austretendes heisses Brühgetränk zu erhalten, welches in eine zweite Kammer (K2) strömen kann,
- wobei in der Fluidverbindung (5) zwischen der Druckkammer (3) und der Brühkammer (4) eine Temperierkammer (TK) angeordnet ist,
- wobei die Temperierkammer (TK) ein Phasenwechselmaterial als Wärmespeicher aufweist,
- wobei die Brühmaschine eine **Baueinheit (70)** aufweist, in welche man eine ein Brühmaterial enthaltende Portionskapsel (2) einführen oder loses Brühmaterial einfüllen kann, um ein heisses Brühgetränk herzustellen,
- und wobei **die Brühkammer (4) in der Baueinheit (70) enthalten** ist und die Baueinheit (70) in die Brühmaschine (1, 1') **zu einer Betriebsstellung hineinführbar** oder **zu einer Beladestellung aus ihr herausführbar** ist, **dadurch gekennzeichnet, dass** der Baueinheit ein **Barriereglied (BG'; BG"; BG*; BG**)** mit einer Vielzahl von **Barriere-Öffnungen (BO)** zugeordnet ist, wobei das Barriereglied zwischen einer **Beladestellung,** in welcher in die Baueinheit eine Brühmaterial enthaltende Portionskapsel (2) eingeführt oder loses Brühmaterial eingefüllt werden kann, und einer **Betriebsstellung,** in welcher das Barriereglied einen Teil der Wand der Brühkammer (4) bilden kann, hin und her bewegbar ist.

2. Brühmaschine (1) nach Anspruch 1, **dadurch gekennzeichnet, dass** die Temperierkammer eine thermische Senke ist, wobei die Temperierkammer mit einem Phasenwechselmaterial gefüllt ist, insbesondere mit einem Wachs, dessen Schmelztemperatur oder Schmelztemperatur-Bereich im Bereich von 20°C bis 95°C liegt

3. Brühmaschine (1) nach einem der Ansprüche 1 oder 2, **dadurch gekennzeichnet, dass** die Temperierkammer (TK) eine Matrix aus Metall und/oder Graphit aufweist, welche sich innerhalb des Phasenwechselmaterials erstreckt.

4. Brühmaschine (1') nach einem der vorhergehenden Ansprüche, **dadurch gekennzeichnet, dass** die Baueinheit (70) eine **Aussparung (71)** zur Aufnahme einer Portionskapsel (2) oder zur Aufnahme von unverpacktem Brühmaterial aufweist und/oder dass die Baueinheit (70) eine Schublade ist.

5. Brühmaschine (1, 1') nach einem der Ansprüche 1 bis 4, **dadurch gekennzeichnet, dass** sie einen Wasser-Vorratsbehälter aufweist, welcher über eine weitere Fluidverbindung (5') mit der Druckkammer (3) in Fluidverbindung steht, wobei vorteilhaft die weitere Fluidverbindung (5') durch die Temperierkammer (TK) hindurch verläuft, wobei vorteilhaft die weitere Fluidverbindung (5') insbesondere mit der Temperierkammer (TK) thermisch gekoppelt ist, und wobei weiter vorteilhaft vorgesehen ist, dass die Fluidverbindung (5) einen in der Temperierkammer (TK) angeordneten ersten Wärmetauscher (WT1) aufweist, mittels welchem die Fluidverbindung (5) mit der Temperierkammer (TK) thermisch gekoppelt ist, und die weitere Fluidverbindung (5') einen in der Temperierkammer (TK) angeordneten zweiten Wärmetauscher (WT2) aufweist, mittels welchem die weitere Fluidverbindung (5') mit der Temperierkammer (TK) thermisch gekoppelt ist.

6. Brühmaschine (1, 1') nach einem der Ansprüche 1 bis 5, **dadurch gekennzeichnet, dass** sie einen Wasser-Einfüllbereich (85) aufweist, über welchen Wasser in die beheizbare Druckkammer (3) einfüllbar ist, wobei vorteilhaft vorgesehen ist dass die Druckkammer (3) in dem Wasser-Einfüllbereich (85) ein Einfüllventil (86) aufweist.

7. Brühmaschine (1, 1') nach einem der Ansprüche 1 bis 6, **dadurch gekennzeichnet, dass** sie einen Heissgetränk-Austrittsbereich (95) aufweist, über welchen das heisse Brühgetränk aus der Brühmaschine austreten kann, wobei vorteilhaft vorgesehen ist, dass der Heissgetränk-Austrittsbereich ein Überdruckventil (96) aufweist, welches durch einen Überdruck von heissem Brühgetränk in der Brühkammer (4) in eine Heissgetränk-Austrittsstellung gebracht werden kann.

8. Brühmaschine (1, 1') nach einem der vorhergehenden Ansprüche, **dadurch gekennzeichnet, dass** die Baueinheit (70) **das erste Aufstech- oder Aufschlitz-Mittel (7),** welches zum Aufstechen oder Aufschlitzen einer Portionskapsel (2) an einem ersten Kapselort (KO1) an deren Kapseloberfläche dient, in der Aussparung (71) der Baueinheit (70) aufweist.

9. Brühmaschine (1, 1') nach einem der vorhergehenden Ansprüche, **dadurch gekennzeichnet, dass** das Barriereglied (BG'; BG"; BG*; BG**) an der Baueinheit mittels eines Gelenks (75; 76) drehbar gelagert und zwischen der Beladestellung und der Betriebsstellung hin und her schwenkbar ist.

10. Brühmaschine (1, 1') nach einem der vorhergehenden Ansprüche, **dadurch gekennzeichnet, dass** das Barriereglied (BG'; BG"; BG*; BG**) das **zweite Aufstech-oder Aufschlitz-Mittel (8)** aufweist, welches zum Aufstechen oder Aufschlitzen einer Portionskapsel (2) an einem zweiten Kapselort (KO2) an deren Kapseloberfläche dient.

11. **Verfahren** zum Brühen eines Heissgetränks unter Verwendung einer Brühmaschine (1, 1') nach einem der Ansprüche 1 bis 10, wobei das Verfahren die folgenden Schritte aufweist:
a) Einsetzen einer Portionskapsel (2) in eine Brühkammer (4) der Brühmaschine (1, 1') bzw. der Baueinheit (70);
b) Aufstechen und/oder Aufschlitzen der in die Brühkammer eingeführten Portionskapsel (2) an einem ersten Kapselort (KO1) an der Kapseloberfläche mittels eines ersten Aufstech- oder Aufschlitz-Mittels (7) der Brühmaschine;
c) Aufstechen und/oder Aufschlitzen der in die Brühkammer eingeführten Portionskapsel (2) an einem zweiten Kapselort (KO2) an der Kapseloberfläche mittels eines zweiten Aufstech- oder Aufschlitz-Mittels (8) der Brühmaschine;
d) Erzeugen von heissem Wasser und/oder heissem Wasserdampf in einer Druckkammer (3);
e) Durchströmen der in die Brühkammer (4) eingeführten Portionskapsel (2) von dem heissen Wasser und/oder heissen Wasserdampf von dem ersten Kapselort (KO1) zu dem zweiten Kapselort (KO2) der Portionskapsel (2); und
f) Auffangen des aus der Portionskapsel (2) austretenden Brühgetränks in einem Auffangbehälter.

12. Verfahren nach Anspruch 11, **dadurch gekennzeichnet,**
**dass** in **Schritt e)** das Durchströmen der Brühkammer (4) unter Ausnutzung des Druckes von in Schritt d) in der Druckkammer (3) erzeugtem heissem Wasserdampf bewirkt wird, welcher das heisse Wasser und/oder den heissen Wasserdampf durch eine die Druckkammer (3) und die Brühkammer (4) verbindende Fluidverbindung (5) und durch die Brühkammer (4) hindurch drückt,
oder dass in **Schritt e)** das Durchströmen der Brühkammer (4) mittels einer Pumpe bewirkt wird, welche in einer die Druckkammer (3) und die Brühkammer (4) verbindenden Fluidverbindung (5) angeordnet ist und das heisse Wasser und/oder den heissen Wasserdampf durch die Fluidverbindung (5) und die Brühkammer (4) hindurch drückt.

## Claims

1. A **brewing machine (1, 1')** into which a portion capsule (2) containing a brewing material can be inserted in order to produce a hot brewed drink, the brewing machine comprising:
- a heatable pressure chamber (3) for receiving water;
- a brewing chamber (4) for receiving the portion capsule (2);
- a fluid connection (5) between the pressure chamber (3) and the brewing chamber (4);
- a first piercing or slitting means (7) for piercing or slitting the portion capsule (2) inserted into the brewing chamber at a first capsule location (KO1) on the capsule surface;
- a second piercing or slitting means (8) for piercing or slitting the portion capsule (2) inserted into the brewing chamber at a second capsule location (KO2) on the capsule surface;
- wherein the portion capsule (2) inserted into the brewing chamber (4) can be flowed through with hot water and/or hot steam generated in the pressure chamber, from the first capsule location (KO1) to the second capsule location (KO2) of the portion capsule (2), in order to obtain a hot brewed drink emerging from the second capsule location (KO2), which can flow into a second chamber (K2);
- a temperature control chamber (TK) being arranged in the fluid connection (5) between the pressure chamber (3) and the brewing chamber (4);
- the temperature control chamber (TK) comprising a phase change material as a heat storage;
- the brewing machine comprising a **structural unit (70)** into which one can insert a portion capsule (2) containing a brewing material or fill in loose brewing material to produce a hot brewed drink; and
- wherein **the brewing chamber (4)** is **contained in the structural unit (70)** and the structural unit (70) **can be moved** into the brewing machine (1, 1') **to an operating position** or **can be moved out of it to a loading position,**
**characterized in that** a **barrier member (BG'; BG"; BG*; BG**)** having a plurality of **barrier openings (BO)** is assigned to the structural unit, wherein the barrier member can be moved back and forth between a **loading position,** in which a portion capsule (2) containing brewing material can be inserted into the structural unit or loose brewing material can be filled, and an **operating position,** in which the barrier member can form part of the wall of the brewing chamber (4).

2. Brewing machine (1) according to claim 1, **characterized in that** the temperature control chamber is a thermal sink, wherein the temperature control chamber is filled with a phase change material, in particular a wax, whose melting temperature or melting temperature range is in the range of 20°C to 95°C.

3. Brewing machine (1) according to one of claims 1 or 2, **characterized in that** the temperature control chamber (TK) comprises a matrix made of metal and/or graphite, which extends within the phase change material.

4. Brewing machine (1') according to one of the preceding claims, **characterized in that** the structural unit (70) comprises a **recess (71)** for receiving a portion capsule (2) or for receiving unpackaged brewing material and/or that the structural unit (70) is a drawer.

5. Brewing machine (1, 1') according to one of claims 1 to 4, **characterized in that** it comprises a water storage container which is in fluid communication with the pressure chamber (3) via a further fluid connection (5'), wherein advantageously the further fluid connection (5') extends through the temperature control chamber (TK), wherein advantageously the further fluid connection (5') is thermally coupled in particular to the temperature control chamber (TK), and it is further advantageously provided that the fluid connection (5) comprises a first heat exchanger (WT1) arranged in the temperature control chamber (TK), by means of which the fluid connection (5) is thermally coupled to the temperature control chamber (TK), and the further fluid connection (5') comprises a second heat exchanger (WT2) arranged in the temperature control chamber (TK), by means of which the further fluid connection (5') is thermally coupled to the temperature control chamber (TK).

6. Brewing machine (1, 1') according to one of claims 1 to 5, **characterized in that** it comprises a water filling region (85) through which water can be filled into the heatable pressure chamber (3), whereby it is advantageously provided that the pressure chamber (3) has a filling valve (86) in the water filling region (85).

7. Brewing machine (1, 1') according to one of claims 1 to 6, **characterized in that** it comprises a hot drink outlet region (95) through which the hot brewed drink can emerge from the brewing machine, it being advantageously provided that the hot drink outlet region comprises a pressure relief valve (96), which can be brought into a hot drink outlet position by an overpressure of hot brewed drink in the brewing chamber (4).

8. Brewing machine (1, 1') according to one of the preceding claims, **characterized in that** the structural unit (70) comprises, in the recess (71) of the structural unit (70), **the first piercing or slitting means (7)** which is used for piercing or slitting a portion capsule (2) at a first capsule location (KO1) on the capsule surface.

9. Brewing machine (1, 1') according to one of the preceding claims, **characterized in that** the barrier member (BG'; BG"; BG*; BG**) is rotatably mounted on the structural unit by means of a joint (75; 76) and can be pivoted back and forth between the loading position and the operating position.

10. Brewing machine (1, 1') according to one of the preceding claims, **characterized in that** the barrier member (BG'; BG"; BG*; BG**) comprises **the second piercing or slitting means (8),** which is used to pierce or slit a portion capsule (2) at a second capsule location (KO2) on the capsule surface.

11. A **method** for brewing a hot drink using a brewing machine (1, 1') according to one of claims 1 to 10, wherein the method comprises the following steps:
a) inserting a portion capsule (2) into a brewing chamber (4) of the brewing machine (1, 1') or the structural unit (70);
b) piercing and/or slitting the portion capsule (2) introduced into the brewing chamber at a first capsule location (KO1) on the capsule surface by means of a first piercing or slitting means (7) of the brewing machine;
c) piercing and/or slitting the portion capsule (2) introduced into the brewing chamber at a second capsule location (KO2) on the capsule surface by means of a second piercing or slitting means (8) of the brewing machine;
d) generating hot water and/or hot steam in a pressure chamber (3);
e) making the hot water and/or hot water vapor flow through the portion capsule (2) introduced into the brewing chamber (4) from the first capsule location (KO1) to the second capsule location (KO2) of the portion capsule (2); and
f) collecting the brewed drink emerging from the portion capsule (2) in a collecting container.

12. Method according to claim 11, **characterized in that** in **step e)** the flow through the brewing chamber (4) is effected using the pressure of hot steam generated in step d) in the pressure chamber (3), which forces the hot water and/or the hot water vapor through a fluid connection (5) connecting the pressure chamber (3) and the brewing chamber (4) and through the brewing chamber (4), or in **step e)** the flow through the brewing chamber (4) is effected by means of a pump, which is arranged in a fluid connection (5) connecting the pressure chamber (3) and the brewing chamber (4) and presses the hot water and/or the hot water vapor through the fluid connection (5) and the brewing chamber (4).

## Revendications

1. **Machine à infuser (1, 1')**, dans laquelle une capsule portionnée (2) contenant un matériau de brassage peut être insérée afin de produire une boisson infusée chaude, la machine à infuser comportant:
- une chambre de pression chauffable (3) pour recevoir de l'eau;
- une chambre d'infusion (4) pour recevoir la capsule portionnée (2);
- une connexion fluidique (5) entre la chambre de pression (3) et la chambre d'infusion (4);
- un premier moyen de perçage ou de fente (7) pour percer ou fendre la capsule portionnée (2) insérée dans la chambre d'infusion au niveau d'un premier emplacement de capsule (KO1) sur la surface de la capsule;
- un deuxième moyen de perçage ou de fente (8) pour percer ou fendre la capsule portionnée (2) insérée dans la chambre d'infusion au niveau d'un deuxième emplacement de capsule (KO2) sur la surface de la capsule;
- dans laquelle la capsule portionnée (2) insérée dans la chambre d'infusion (4) peut être traversée par de l'eau chaude et/ou de la vapeur chaude générée dans la chambre de pression depuis le premier emplacement de capsule (KO1) jusqu'au deuxième emplacement de capsule (KO2) de la capsule portionnée (2), afin d'obtenir une boisson infusée chaude sortant du deuxième emplacement de capsule (KO2) et qui peut s'écouler dans une deuxième chambre (K2);
- une chambre de régulation de température (TK) étant disposée dans la connexion fluidique (5) entre la chambre de pression (3) et la chambre de brassage (4);
- la chambre de régulation de température (TK) comportant un matériau à changement de phase comme accumulateur de chaleur;
- la machine à infuser comportant une **unité structurelle (70)** dans laquelle on peut insérer une capsule portionnée (2) contenant un matériau de brassage ou remplir un matériau de brassage en vrac pour préparer une boisson infusée chaude;
- et dans laquelle **la chambre d'infusion (4)** est **contenue dans l'unité structurelle (70)** et l'unité structurelle (70) **peut être amenée** dans la machine à infuser (1, 1') **vers une position de fonctionnement ou peut être amenée hors de celle-ci vers une position de chargement,**
**caractérisée en ce qu'**un **membre de barrière (BG'; BG"; BG*; BG**)** doté d'une pluralité **d'ouvertures de barrière (BO)** est assigné à l'unité structurelle, le membre de barrière pouvant être déplacé d'avant en arrière entre une **position de chargement,** dans laquelle une capsule portionnée (2) contenant du matériau de brassage peut être insérée dans l'unité structurelle ou du matériau de brassage en vrac peut être rempli, et une **position de fonctionnement,** dans laquelle le membre de barrière peut faire partie de la paroi de la chambre d'infusion (4).

2. Machine à infuser (1) selon la revendication 1, **caractérisée en ce que** la chambre de régulation de température est un puits thermique, dans laquelle la chambre de régulation de température est remplie d'un matériau à changement de phase, notamment une cire, dont la température de fusion ou la plage de température de fusion est comprise entre 20 °C et 95 °C.

3. Machine à infuser (1) selon l'une des revendications 1 ou 2, **caractérisée en ce que** la chambre de régulation de température (TK) comporte une matrice en métal et/ou en graphite, qui s'étend au sein du matériau à changement de phase.

4. Machine à infuser (1') selon l'une des revendications précédentes, **caractérisée en ce que** l'unité structurelle (70) comporte un **évidement (71)** pour recevoir une capsule portionnée (2) ou pour recevoir du matériau de brassage non emballé et/ou que l'unité structurelle (70) est un tiroir.

5. Machine à infuser (1, 1') selon l'une des revendications 1 à 4, **caractérisée en ce qu'**elle comporte un réservoir de stockage d'eau qui est en communication fluidique avec la chambre de pression (3) via une autre connexion fluidique (5'), avantageusement l'autre connexion fluidique (5') traversant la chambre de régulation de température (TK), l'autre connexion fluidique (5') étant avantageusement couplée thermiquement en particulier à la chambre de régulation de température (TK), et il est en outre avantageusement prévu que la connexion fluidique (5) comporte un premier échangeur de chaleur (WT1) disposé dans la chambre de régulation de température (TK), au moyen duquel la connexion fluidique (5) est couplée thermiquement à la chambre de régulation de température (TK), et l'autre connexion fluidique (5') comporte un deuxième échangeur de chaleur (WT2) disposé dans la chambre de régulation de température (TK), au moyen duquel l'autre connexion fluidique (5') est couplée thermiquement à la chambre de régulation de température (TK).

6. Machine à infuser (1, 1') selon l'une des revendications 1 à 5, **caractérisée en ce qu'**elle comporte une zone de remplissage d'eau (85) par laquelle de l'eau peut être introduite dans la chambre de pression chauffable (3), et il est avantageusement prévu que la chambre de pression (3) comporte une vanne de remplissage (86) dans la zone de remplissage d'eau (85).

7. Machine à infuser (1, 1') selon l'une des revendications 1 à 6, **caractérisée en ce qu'**elle présente une zone de sortie de boisson chaude (95) par laquelle la boisson chaude infusée peut ressortir de la machine à infuser, étant avantageusement prévue que la zone de sortie de boisson chaude comporte une soupape de surpression (96) qui peut être amenée dans une position de sortie de boisson chaude par une surpression de boisson infusée chaude dans la chambre d'infusion (4).

8. Machine à infuser (1, 1') selon l'une des revendications précédentes, **caractérisée en ce que** l'unité structurelle (70) comporte, dans l'évidement (71) de l'unité structurelle (70), le **premier moyen de perçage ou de fente (7)** qui est utilisé pour percer ou fendre une capsule portionnée (2) au niveau d'un premier emplacement de capsule (KO1) sur la surface de la capsule.

9. Machine à infuser (1, 1') selon l'une des revendications précédentes, **caractérisée en ce que** le membre de barrière (BG'; BG"; BG*; BG**) est monté rotatif sur l'unité structurelle au moyen d'une articulation (75; 76) et peut pivoter d'avant en arrière entre la position de chargement et la position de fonctionnement.

10. Machine à infuser (1, 1') selon l'une des revendications précédentes, **caractérisée en ce que** le membre de barrière (BG'; BG"; BG*; BG**) comporte le **deuxième moyen de perçage ou de fente (8),** qui est utilisé pour percer ou fendre une capsule portionnée (2) au niveau d'un deuxième emplacement de capsule (KO2) sur la surface de la capsule.

11. **Procédé** de préparation d'une boisson chaude à l'aide d'une machine à infuser (1, 1') selon l'une des revendications 1 à 10, dans lequel le procédé comporte les étapes suivantes:
a) insérer une capsule portionnée (2) dans une chambre d'infusion (4) de la machine à infuser (1, 1') ou de l'unité structurelle (70);
b) percer et/ou fendre la capsule portionnée (2) introduite dans la chambre d'infusion au niveau d'un premier emplacement de capsule (KO1) sur la surface de la capsule au moyen d'un premier moyen de perçage ou de fente (7) de la machine à infuser;
c) percer et/ou fendre la capsule portionnée (2) introduite dans la chambre d'infusion au niveau d'un deuxième emplacement de capsule (KO2) sur la surface de la capsule au moyen d'un deuxième moyen de perçage ou de fente (8) de la machine à infuser;
d) générer de l'eau chaude et/ou de la vapeur chaude dans une chambre de pression (3);
e) faire écouler l'eau chaude et/ou la vapeur d'eau chaude à travers la capsule portionnée (2) introduite dans la chambre d'infusion (4) depuis le premier emplacement de capsule (KO1) jusqu'au deuxième emplacement de capsule (KO2) de la capsule portionnée (2); et
f) collecter la boisson infusée émergeant de la capsule portionnée (2) dans un récipient collecteur.

12. Procédé selon la revendication 11, **caractérisé en ce qu'**à **l'étape e)** l'écoulement à travers la chambre d'infusion (4) s'effectue en utilisant la pression de vapeur chaude générée à l'étape d) dans la chambre de pression (3), ce par quoi l'eau chaude et/ou la vapeur d'eau chaude sont forcées à travers une connexion fluidique (5) reliant la chambre de pression (3) et la chambre d'infusion (4), et à travers la chambre d'infusion (4), ou à **l'étape e)** l'écoulement à travers la chambre d'infusion (4) s'effectue au moyen d'une pompe qui est disposée dans une connexion fluidique (5) reliant la chambre de pression (3) et la chambre d'infusion (4) et qui pousse l'eau chaude et/ou la vapeur d'eau chaude à travers la connexion fluidique (5) et à travers la chambre d'infusion (4).
